# EUROPÄISCHE PATENTANMELDUNG

(11) **EP 4 570 148 A1**
(43) Veröffentlichungstag der Anmeldung: **18.06.2025**
(21) Anmeldenummer: 23216633.0
(22) Anmeldetag: 14.12.2023
(51) Int. Cl.: A47J 43/08, F04D 29/28, F04D 29/30, F04D 29/58, H02K 9/06

(54) **ELEKTROMOTOR, KÜCHENMASCHINE UND VERFAHREN ZUM BETRIEB EINER KÜCHENMASCHINE**

(71) Anmelder: Vorwerk & Co. Interholding GmbH, 42275 Wuppertal (DE)
(72) Erfinder: MOSQUERA MICHAELSEN, Pablo, 45473 Mühlheim an der Ruhr (DE); SCHMIDT, Dirk, 51688 Wipperfürth (DE); COHRS, Mathias, 42113 Wuppertal (DE); STENZEL, Nicolai, 42281 Wuppertal (DE); PLAßMANN, Margret, 42279 Wuppertal (DE); PIZZONE, Alessandro, 51519 Odenthal (DE)
(74) Vertreter: Von Rohr Patentanwälte Partnerschaft mbB

(57) **Zusammenfassung**

Es wird ein Elektromotor, insbesondere für eine Küchenmaschine, vorgeschlagen, wobei der Elektromotor ein Lüfterrad zur Kühlung des Elektromotors aufweist. Das Lüfterrad weist auf einer Axialseite eines ringförmigen Tragkörpers angeordnete Schaufeln auf. Die Schaufeln ragen radial außen über den Tragkörper hinaus und/oder weisen ein gebogenes inneres Ende und ein radial verlaufendes äußeres Ende auf. Ferner wird eine Küchenmaschine mit einem entsprechenden Elektromotor vorgeschlagen. Darüber hinaus wird ein Verfahren zum Betrieb einer Küchenmaschine zur Zubereitung von Lebensmitteln mittels eines Rezepts vorgeschlagen, wobei ein Werkzeug der Küchenmaschine mittels eines Elektromotors sowohl in einer ersten Drehrichtung als auch einer zweiten Drehrichtung betrieben wird, wobei die Drehrichtung, die Drehdauer und/oder die Drehzahl in Abhängigkeit von dem Rezept variiert wird und wobei ein Lüfterrad des Elektromotors bei gleicher Drehzahl in der ersten Drehrichtung einen größeren Volumenstrom als in der zweiten Drehrichtung erzeugt.

## Beschreibung

Die vorliegende Erfindung betrifft einen Elektromotor, insbesondere für eine Küchenmaschine, eine Küchenmaschine mit einem Elektromotor und ein Verfahren zum Betreiben einer Küchenmaschine.

Elektromotoren, beispielsweise in Form von bürstenlosen Gleichstrommotoren (BLDC-Motoren) oder geschalteten Reluktanzmotoren (SR-Motoren), sind aus dem Stand der Technik bekannt und weisen einen Ständer/Stator und einen relativ zum Stator rotierenden Läufer/Rotor auf.

Bei bürstenlosen Gleichstrommotoren ist der Stator mit Statorspulen und der Rotor mit Permanentmagneten bestückt. Die Permanentmagneten können hierbei außen am Rotorkern (SPM - Surface Permanent Magnet) oder im Rotorkern vorgesehen bzw. eingebettet sein (IPM - Interior Permanent Magnet).

Bei geschalteten Reluktanzmotoren ist der Stator ebenfalls mit Statorspulen bestückt, der Rotor weist jedoch keine Permanentmagneten oder Spulen auf, sondern besteht ausschließlich aus Elektroblech oder dergleichen. Das Drehmoment im Rotor wird hierbei ausschließlich durch die Reluktanzkraft erzeugt.

Im Betrieb erhitzt sich der Elektromotor und muss daher ausreichend gekühlt werden, um eine Überhitzung zu vermeiden. Bekannte Lösungen verwenden ein Lüfterrad, das sich mit dem Rotor dreht und so einen Luftstrom zur Kühlung des Elektromotors erzeugt.

Herausforderungen ergeben sich insbesondere bei Elektromotoren, die über große Drehzahl- und Drehmomentbandbreiten arbeiten und/oder klein bzw. kompakt sein sollen, beispielsweise beim Einsatz in einer Küchenmaschine. Eine effiziente Kühlung wird hierbei einerseits durch eine große Anzahl verschiedener Betriebsmodi, andererseits durch eine kompakte Bauweise erschwert. Zudem erhöht sich die Geräuschemission des Elektromotors.

Ferner werden Elektromotoren üblicherweise nur in einer Drehrichtung betrieben, da dies für die meisten Anwendungen ausreichend ist. Solche Elektromotoren sind nur für diese eine Drehrichtung ausgelegt und optimiert, beispielsweise ist das Lüfterrad derart gestaltet, dass nur in dieser einen Drehrichtung eine ausreichende Kühlung gewährleistet ist. Derartige Elektromotoren können nicht in die andere Drehrichtung betrieben werden.

Die europäische Patentanmeldung mit der Anmeldenummer EP 23 179 122.9, die am 14. Juni 2023 eingereicht wurde und lediglich nachveröffentlichten Stand der Technik darstellt, offenbart einen Elektromotor für eine Küchenmaschine mit einem Lüfterrad, das in beide Drehrichtungen den gleichen Luftstrom fördert.

Der vorliegenden Erfindung liegt die Aufgabe zugrunde, einen verbesserten Elektromotor, eine Küchenmaschine mit einem verbesserten Elektromotor und ein verbessertes Verfahren zum Betreiben einer Küchenmaschine anzugeben, wobei der Elektromotor eine einfache, kompakte, stabile und/oder kostengünstige Konstruktion aufweist bzw. Montage/Herstellung ermöglicht, und/oder wobei der Elektromotor bzw. die Küchenmaschine eine besonders effiziente Laufweise, geringe Geräuschemission, gute Wärmeabfuhr/Luftführung und/oder hohe Leistungsdichte, insbesondere über einen großen Drehzahlbereich und/oder in beide Drehrichtungen, aufweist.

Die der Erfindung zugrundeliegende Aufgabe wird durch einen Elektromotor gemäß Anspruch 1, eine Küchenmaschine gemäß Anspruch 12 oder ein Verfahren gemäß Anspruch 13 gelöst. Vorteilhafte Weiterbildungen sind Gegenstand der Unteransprüche.

Der vorschlagsgemäße Elektromotor weist einen (feststehenden) Stator und einen relativ zum Stator um eine Rotationsachse drehbaren Rotor auf.

Die räumlichen Zuordnungen, Anordnungen und/oder Ausrichtungen, insbesondere die im Rahmen der vorliegenden Erfindung verwendeten Begriffe "radial", "axial" und/oder "in Umfangsrichtung", beziehen sich - sofern nicht anders angegeben - insbesondere auf die Rotationsachse des Rotors bzw. eine Rotorwelle des Rotors.

Wird nur ein Bauteil des Motors, beispielsweise ein Lüfterrad, beschrieben, beziehen sich die entsprechenden Begrifflichkeiten vorzugsweise auf die (gedachte) Rotationsachse bei eingesetztem Rotor. Die Begrifflichkeiten können aber auch auf eine Symmetrieachse oder Zentralachse des Bauteils bezogen werden, die bevorzugt mit der Rotationsachse zusammenfällt.

Begriffe wie "oben", "unten" und dergleichen beziehen sich vorzugsweise auf die Erstreckung der Rotationsachse des Rotors bzw. Zentral-/Symmetrieachse des Bauteils.

Die Begriffe werden hierbei gemäß der bevorzugten Ausrichtung des Elektromotors im eingebauten Zustand verwendet. Hierbei ist jedoch zu berücksichtigen, dass der Einbau des Elektromotors in eine Küchenmaschine oder eine andere Vorrichtung auch in einer anderen Ausrichtung erfolgen kann.

Generell ist der Rotor sowohl in einer ersten Drehrichtung als auch in einer zweiten, der ersten Drehrichtung entgegengesetzten, Drehrichtung drehbar bzw. ist der Elektromotor sowohl in der ersten als auch der zweiten Drehrichtung betreibbar.

Zur Kühlung des Elektromotors weist der Rotor ein Lüfterrad auf. Insbesondere ist das Lüfterrad an einer Welle des Rotors befestigt. Als Teil des Rotors rotiert der Lüfter bei Betrieb des Elektromotors um die Rotationsachse und kann so entsprechend Luft fördern, um den Elektromotor zu kühlen.

Das Lüfterrad weist einen ringförmigen und/oder flanschartigen Tragkörper und eine Vielzahl an Schaufeln auf, die auf einer Axialseite, insbesondere der Unterseite, des Tragkörpers angeordnet sind, um Luft in radialer Richtung aus dem Elektromotor zu leiten.

Vorzugsweise ist das Lüfterrad derart ausgebildet, Luft in axialer Richtung anzusaugen und in radiale Richtung umzuleiten, auszublasen bzw. ausströmen zu lassen, insbesondere sowohl beim Betrieb in die erste als auch in die zweite Drehrichtung.

Das Lüfterrad ist vorzugsweise einstückig ausgebildet und/oder spritzgegossen.

Gemäß einem Aspekt der vorliegenden Erfindung weist jede Schaufel ein (radial) äußeres Ende und ein (radial) inneres Ende auf, wobei das äußere Ende zumindest im Wesentlichen in radialer Richtung verläuft und wobei das innere Ende in die erste Drehrichtung gebogen ist.

Die Begriffe "außen" bzw. "äußeres" und "innen" bzw. "inneres" beziehen sich vorzugsweise auf die Rotationsachse des Rotors bzw. Symmetrieachse des Lüfterrads.

Das äußere Ende ist also vorzugsweise (in radialer Richtung) weiter von der Rotationsachse entfernt als das innere Ende.

Durch die vorschlagsgemäße Schaufelgeometrie, insbesondere deren inneren Enden, erzeugt das Lüfterrad bei (betragsmäßig) gleicher Drehzahl einen größeren Volumenstrom bei Drehung in die erste Drehrichtung als bei Drehung in die zweite Drehrichtung. Dies ist insbesondere vorteilhaft, wenn die durchschnittliche Motorbelastung in der ersten Drehrichtung größer ist als in der zweiten Drehrichtung, beispielsweise weil der Elektromotor bzw. Rotor öfter und/oder bei höheren Drehzahlen in der ersten Drehrichtung als in der zweiten Drehrichtung betrieben wird.

Durch die vorschlagsgemäße Schaufelgeometrie, insbesondere deren äußere Enden, wird zudem auch ein Betrieb in der zweiten Drehrichtung ermöglicht. Insbesondere wird auch in der zweiten Drehrichtung noch ein ausreichend großer Volumenstrom erzeugt, um den Elektromotor effizient zu kühlen.

Aufgrund der in erster Drehrichtung gebogenen Schaufeln kann vorzugsweise mehr Luft zwischen zwei Schaufeln eintreten als in der zweiten Drehrichtung, der Volumenstrom ist hierdurch folglich gegenüber der zweiten Drehrichtung erhöht. Auch in der zweiten Drehrichtung kann aber vorzugsweise noch genug Luft eintreten, um einen ausreichenden Volumenstrom zu gewährleisten.

Vorzugsweise ist der Luftstrom an den äußeren Enden der Schaufeln bzw. bei Austritt aus dem Lüfterrad vorzugweise zumindest im Wesentlichen radial bzw. zumindest im Wesentlichen ohne Komponente in eine Drehrichtung, so dass die austretende Luft keine (signifikanten) Kräfte in eine der Drehrichtungen erzeugt. Bei am äußeren Ende gebogenen Schaufeln würde hingegen in eine Drehrichtung eine Bremskraft wirken, die die Effizienz des Lüfterrads in diese Drehrichtung vermindern oder sogar zu einem Einbrechen des Luftstroms führen könnte.

Es wird somit ein Elektromotor vorgeschlagen, der in beide Drehrichtungen betreibbar ist, der aber dennoch eine Vorzugsrichtung, nämlich die erste Drehrichtung, aufweist.

Der vorschlagsgemäße Elektromotor unterscheidet sich einerseits von Elektromotoren mit Lüfterrädern, die nur in eine Drehrichtung betrieben werden können bzw. nur in einer Drehrichtung einen Kühlstrom erzeugen, und andererseits von Elektromotoren mit Lüfterrädern, die in beiden Drehrichtungen einen gleich großen Kühlstrom erzeugen.

Besonders vorteilhaft ist der Elektromotor damit in Anwendungsbereichen, die beide Drehrichtungen nutzen bzw. benötigen, die den Elektromotor aber in der ersten Drehrichtung stärker belasten bzw. bei denen in der ersten Drehrichtung eine grö-ßere Hitzeentwicklung auftritt bzw. eine größere Kühlleistung benötigt wird. Insbesondere kann der vorschlagsgemäße Elektromotor vorteilhaft in einer Küchenmaschine, insbesondere einer multifunktionalen Küchenmaschine, eingesetzt werden.

Ein weiterer Vorteil ist, dass der vorschlagsgemäße Elektromotor in der ersten Drehrichtung bei höheren Drehzahlen betreibbar ist als ein vergleichbarer Elektromotor mit Lüfterrad, das in beide Drehrichtungen gleich kühlt. Gegenüber einem solchen Elektromotor ist die Kühlleistung des vorschlagsgemäßen Elektromotors in der ersten Drehrichtung vorzugsweise erhöht, sodass höhere Drehzahlen erreicht werden können, ohne dass der Elektromotor überhitzt.

Die Schaufeln erstrecken sich vorzugsweise jeweils von ihrem inneren Ende zu ihrem äußeren Ende, wobei die Haupterstreckungsrichtung vorzugsweise zumindest im Wesentlichen radial ist. Insbesondere weist das in die erste Drehrichtung gebogene innere Ende auch eine Radialkomponente auf. Hierdurch wird die Luftführung bzw. der Volumenstrom insbesondere in die zweite Drehrichtung verbessert.

Vorzugsweise schließen die inneren Enden der Schaufeln jeweils mit der radialen Richtung einen Winkel von mehr als 35° und/oder weniger als 55°, besonders bevorzugt von etwa 45°, ein.

Gemäß einem weiteren Aspekt der vorliegenden Erfindung, der auch unabhängig realisiert sein kann, ragen die Schaufeln radial außen über den Tragkörper hinaus.

Ein Vorteil hiervon ist, dass an der Außenseite des Lüfterrads weniger Material für den Tragkörper benötigt wird. Dies ist einer kompakten und/oder kostengünstigen Bauweise zuträglich. Zudem werden im Betrieb auftretende Zentrifugalkräfte reduziert. Hierdurch wird eine stabilere Konstruktion, effizientere Laufweise, geringere Geräuschemission und/oder höhere Leistungsdichte erzielt.

Vorzugsweise verjüngt sich das äußere Ende radial nach außen und/oder bildet eine Spitze. Einerseits ist dies einer verbesserten Luftführung zuträglich und/oder führt zu einem höheren Volumenstrom und somit einer besseren Kühlleistung. Andererseits wird so auch für die Schaufeln weniger Material am äußeren Ende benötigt bzw. die auftretenden Zentrifugalkräfte verringert, was entsprechende Vorteile erzielt.

Bevorzugt verjüngt sich die Dicke des Tragkörpers radial nach außen. Dies führt zu einer weiteren Materialersparnis an der Außenseite und Reduzierung von Zentrifugalkräften mit entsprechenden Vorteilen.

Vorzugsweise sind die inneren Enden der Schaufeln von einem Innenrand des Tragkörpers beabstandet. Einerseits kann hierdurch Material gespart werden, was einer kompakten und/oder kostengünstigen Bauweise zuträglich ist. Andererseits wird hierdurch die Luftführung bzw. der Volumenstrom für die zweite Drehrichtung verbessert, insbesondere ohne die Luftführung bzw. den Volumenstrom in die erste Drehrichtung signifikant zu verschlechtern.

Die Schaufeln sind vorzugsweise rippenförmig ausgebildet und/oder erstrecken sich in axialer Richtung geradlinig. Hierdurch wird vorzugsweise die, insbesondere radiale, Luftführung verbessert.

Bevorzugt weist das Lüfterrad Speichen auf, die sich in radialer Richtung, insbesondere vom Innenrand des Tragkörpers, erstrecken. Hierdurch wird eine stabile, kompakte und/oder kostengünstige Bauweise erzielt.

Vorzugsweise sind die Speichen T-trägerförmig ausgebildet, weisen insbesondere in einem Schnitt senkrecht zu ihrer Längs- bzw. Radialerstreckung eine T-Form auf. Hierdurch wird die Stabilität des Lüfterrads weiter erhöht.

Die Höhe der Speichen verringert sich vorzugsweise von innen nach außen. Dies führt zu einer weiteren Materialersparnis und Reduzierung von Zentrifugalkräften mit entsprechenden Vorteilen. Zudem wird hierdurch der Spritzgießprozess verbessert.

Das Lüfterrad weist vorzugsweise äußere Speichen und innere Speichen auf, wobei die inneren Speichen zu den äußeren Speichen versetzt angeordnet sind und/oder wobei die äußeren und inneren Speichen über einen Verbindungsring miteinander verbunden sind. Hierdurch wird die Stabilität des Lüfterrads weiter erhöht.

Insbesondere dient der Verbindungsring einer verbesserten Kraftverteilung von innen nach außen.

Vorzugsweise hat der vorschlagsgemäße Elektromotor eine große Drehzahlspreizung. Hierunter ist zu verstehen, dass der Elektromotor über einen großen Drehzahlbereich betrieben werden kann, insbesondere sowohl bei niedrigen als auch bei hohen Drehzahlen. Besonders bevorzugt sind Drehzahlen von 10 U/min bis 10.000 U/min, ganz besonders bevorzugt von 1 U/min bis 12.000 U/min oder bis 15.000 U/min, mit dem vorschlagsgemäßen Elektromotor, zumindest in der ersten Drehrichtung, realisierbar.

Vorzugsweise weist der Elektromotor über den gesamten realisierbaren Drehzahlbereich eine geringe Geräuschemission, effiziente Laufweise und/oder hohe Leistungsdichte auf, insbesondere aufgrund der Ausgestaltung des Lüfterrads.

Besonders vorteilhaft ist die Verwendung des vorschlagsgemäßen Elektromotors in einer Küchenmaschine. Grundsätzlich kann der Elektromotor jedoch auch in anderen Vorrichtungen verwendet werden, beispielsweise einem Staubsauger oder Saugroboter.

Ein weiterer, auch unabhängig realisierbarer Aspekt der vorliegenden Erfindung betrifft eine Küchenmaschine mit einem vorschlagsgemäßen Elektromotor.

Die vorschlagsgemäße Küchenmaschine weist ein Werkzeug auf, das von dem Elektromotor angetrieben, insbesondere gedreht, wird bzw. antreibbar, insbesondere in Drehung versetzbar, ist.

Das Werkzeug weist vorzugsweise eine oder mehrere Schneiden auf, die in die erste Drehrichtung orientiert ist/sind bzw. nur bei Drehung in die erste Drehrichtung wirken. Insbesondere werden Lebensmittel nur dann von dem Werkzeug bzw. der/den Schneide(n) zerschnitten, wenn der Elektromotor bzw. das Werkzeug in der ersten Drehrichtung betrieben wird.

Beim Betrieb in der zweiten Drehrichtung wirken die Schneiden vorzugsweise nicht, so dass das Werkzeug dann zum, insbesondere schnittlosen, Verrühren von Lebensmitteln verwendet werden kann.

Durch die Verwendung des vorschlagsgemäßen Elektromotors in der vorschlagsgemäßen Küchenmaschine können entsprechende Vorteile erzielt werden.

Der große Drehzahlbereich, in dem der Elektromotor arbeiten kann, ist besonders vorteilhaft bei der Verwendung in einer Küchenmaschine. Je nach eingestellter Drehzahl und Drehrichtung des Elektromotors kann sowohl ein Rühren von Speisen als auch ein Zerkleinern von Speisen erzielt werden. Der vorschlagsgemäße Elektromotor erlaubt hierbei vorzugsweise auch ein langsames Rühren, was eine größere Rezeptvielfalt erlaubt. Zudem wird vorzugsweise auch ein definiertes Zerkleinern von Zutaten ermöglicht, was einer besseren Zubereitung und/oder besseren Optik der Speisen zuträglich ist.

Zum Zerschneiden bzw. Zerkleinern von Lebensmitteln sind üblicherweise sehr viel höhere Drehzahlen als für das Verrühren nötig. Ferner kann die Küchenmaschine zum Vermischen bzw. Rühren von Lebensmitteln auch in der ersten Drehrichtung betrieben werden, wenn es nicht darauf ankommt, ob die Lebensmittel dabei zerkleinert werden. Die vorschlagsgemäße Küchenmaschine wird daher bevorzugt öfter und/oder mit höheren Drehzahlen in der ersten Drehrichtung als in der zweiten Drehrichtung betrieben. Das vorschlagsgemäße Lüfterrad des vorschlagsgemäßen Elektromotors ist daher besonders vorteilhaft.

Ferner ist die geringe Geräuschemission und/oder effiziente Laufweise des vorschlagsgemäßen Elektromotors in der Küchenmaschine vorteilhaft, und/oder kann der vorschlagsgemäße Elektromotor aufgrund seiner kompakten, flachen bzw. einfachen Bauweise besonders platzsparend in der Küchenmaschine angeordnet werden.

Ein weiterer Aspekt der vorliegenden Erfindung, der auch unabhängig realisiert sein kann, betrifft ein Verfahren zum Betreiben einer Küchenmaschine zur Zubereitung von Lebensmitteln mittels eines Rezepts.

Die in dem Verfahren verwendete Küchenmaschine weist einen Elektromotor mit einem Rotor und einem Stator auf. Ferner weist die Küchenmaschine ein Werkzeug auf, das mittels des Elektromotors angetrieben wird bzw. antreibbar ist, insbesondere gedreht wird bzw. werden kann. Hierbei ist der Elektromotor bzw. das Werkzeug sowohl in einer ersten Drehrichtung als auch in einer zweiten Drehrichtung, die der ersten Drehrichtung entgegensetzt ist, betreibbar bzw. antreibbar/drehbar.

Der Elektromotor bzw. dessen Rotor weist ein Lüfterrad zur Kühlung des Elektromotors auf. Insbesondere dreht sich das Lüfterrad zusammen mit dem Rotor und erzeugt so einen Luftstrom bzw. Kühlungsstrom.

Vorschlagsgemäß weist das Lüfterrad Schaufeln auf, die in die erste Drehrichtung gebogen sind, so dass das Lüfterrad beim Betrieb mit (betragsmäßig) gleicher Drehzahl in der ersten Drehrichtung einen größeren Luftvolumenstrom als in der zweiten Drehrichtung erzeugt.

Bei dem vorschlagsgemäßen Verfahren wird die Drehrichtung, die Drehdauer und/oder die Drehzahl des Rotors in Abhängigkeit von dem Rezept variiert. Der Elektromotor bzw. das Werkzeug wird während der Durchführung des Rezepts sowohl in die erste als auch die zweite Drehrichtung, insbesondere abhängig vom jeweiligen Zubereitungsschritt, betrieben bzw. gedreht. Insbesondere wird also der Rotor mit dem Lüfterrad mal in die erste Drehrichtung und mal in die zweite Drehrichtung gedreht. Hierbei ist die Gesamt-Drehdauer und/oder die maximale und/oder durchschnittliche Drehzahl für die erste Drehrichtung größer als für die zweite Drehrichtung.

Unter der "Gesamt-Drehdauer für die erste/zweite Drehrichtung" ist vorzugsweise die Zeit gemeint, die der Elektromotor für das Rezept insgesamt in die erste/zweite Drehrichtung betrieben wird. Die Gesamt-Drehdauer kann sich aus verschiedenen Intervallen zusammensetzen, wobei der Elektromotor zwischen zwei Intervallen nicht oder in die andere Drehrichtung betrieben wird. Vorzugsweise entspricht ein Intervall einem Zubereitungsschritt.

Unter der "durchschnittlichen Drehzahl für die erste/zweite Drehrichtung" ist vorzugsweise die über das gesamte Rezept gemittelte Drehzahl gemeint, mit der der Elektromotor in die erste/zweite Drehrichtung betrieben wird, vorzugsweise ohne Berücksichtigung der Dauer, die der Elektromotor bei den jeweiligen Drehzahlen betrieben wird. Insbesondere kann die durchschnittliche Drehzahl auch dann in der ersten Drehrichtung größer als in der zweiten Drehrichtung sein, wenn der Elektromotor in der ersten Drehrichtung nur kurz aber bei hoher Drehzahl betrieben wird.

Es wird somit ein Verfahren vorgeschlagen, bei dem ein Elektromotor einer Küchenmaschine vorteilhaft in beiden Drehrichtungen betrieben wird. In vorteilhafter Weise können so verschiedene Funktionen der Küchenmaschine bzw. des Werkzeugs jeweils einer Drehrichtung zugeordnet sein/werden. Alternativ oder zusätzlich können auch Funktionen realisiert sein/werden, die beide Drehrichtungen benötigen oder bei denen zwei Drehrichtungen vorteilhaft sind, beispielsweise Kneten eines Teigs.

Bei vielen Rezepten wird der Elektromotor jedoch in einer Drehrichtung mehr beansprucht/belastet als in der anderen Drehrichtung, beispielsweise weil die erste Drehrichtung/Funktion häufiger ausgeführt wird als die zweite Drehrichtung/Funktion, und/oder weil für die erste Drehrichtung/Funktion eine höhere Leistung des Elektromotors als für die zweite Drehrichtung/Funktion benötigt wird. In vorteilhafter Weise wird in dem vorschlagsgemäßen Verfahren ein Lüfterrad verwendet, das an derartige Rezepte angepasst ist, indem es in der ersten Drehrichtung einen höheren Luftstrom als in der zweiten Drehrichtung erzeugt. Hierdurch steigt die Effizienz, da bei den hohen Belastungen eine bessere Kühlung erzielt wird als mit einem unangepassten Lüfterrad, das in beide Richtungen den gleichen Kühlstrom liefert.

Besonders bevorzugt weist das Werkzeug eine oder mehrere Schneiden zum Zerschneiden/Zerkleinern von Lebensmitteln auf, die nur wirkt/wirken, wenn das Werkzeug bzw. der Elektromotor in der ersten Drehrichtung betrieben wird. Vorzugsweise werden Lebensmittel beim Betrieb in der ersten Drehrichtung zerschnitten/zerkleinert, während in der zweiten Drehrichtung eine andere Funktion, beispielsweise ein schneidloses Verrühren von Lebensmitteln, erfolgt.

Beim Betrieb der Küchenmaschine bzw. des Elektromotors strömt vorzugsweise sowohl beim Betrieb in die erste Drehrichtung als auch in die zweite Drehrichtung Luft zur Kühlung des Elektromotors an einer axialen Seite des Elektromotors in axialer Richtung, insbesondere von unten, ein und an der gegenüberliegenden Seite, insbesondere einem oberen Bereich des Elektromotors, in radialer Richtung aus. Dies ermöglicht eine gute Wärmeabfuhr bzw. Kühlung des Elektromotors. Zudem kann der Elektromotor besonders kompakt in die Küchenmaschine eingebaut werden, da die Luft seitlich ausgestoßen wird.

Vorzugsweise wird das vorschlagsgemäße Verfahren mit dem vorschlagsgemäßen Elektromotor und/oder der vorschlagsgemäßen Küchenmaschine durchgeführt. Vorzugsweise ist die vorschlagsgemäße Küchenmaschine dazu ausgebildet, das vorschlagsgemäße Verfahren durchzuführen.

Ein Lebensmittel im Sinne der vorliegenden Erfindung ist vorzugsweise ein Nahrungsmittel und/oder ein Genussmittel für den Verzehr. Lebensmittel können beispielsweise Produkte pflanzlichen Ursprungs, wie Gemüse, Obst und/oder ein Getreidetrockenprodukt, und/oder Produkte tierischen Ursprungs, wie Eier, Fleischwaren und/oder Milchprodukte, sein.

Ein Lebensmittel im Sinne der vorliegenden Erfindung kann ein Anfangs-, Zwischen- und/oder Endprodukt für den Verzehr bzw. für eine Speise und/oder ein Gericht sein. Insbesondere kann ein Lebensmittel im Sinne der vorliegenden Erfindung eine Zutat für eine Speise und/oder ein Gericht bilden und/oder selbst durch mehrere Lebensmittel gebildet sein.

Ein Rezept im Sinne der vorliegenden Erfindung ist vorzugsweise eine, insbesondere programmatische und/oder digitale, Anweisung zur Zubereitung bzw. Bearbeitung eines Lebensmittels mittels der Küchenmaschine, insbesondere um eine Speise und/oder ein Gericht und/oder Bestandteile davon zuzubereiten.

Vorzugsweise beinhaltet ein Rezept im Sinne der vorliegenden Erfindung ein oder mehrere (sequenzielle) Zubereitungsschritte, insbesondere wobei jeder Zubereitungsschritt Angaben bezüglich eines zu verwendenden Lebensmittels und einer mit dem Lebensmittel durchzuführenden Handlung umfasst. Beispielsweise kann ein Zubereitungsschritt eine (vorgegebene) Angabe zu der Menge des zu verwendenden Lebensmittels und eine einzustellende Drehzahl und Drehdauer eines Elektromotors der Küchenmaschine umfassen.

Die Zubereitungsschritte eines Rezepts können manuell von einem Benutzer mit der Küchenmaschine durchgeführt und/oder an der Küchenmaschine eingestellt werden. Alternativ kann die Küchenmaschine dazu ausgebildet sein, zumindest teil-automatisiert, selbst einen oder mehrere Zubereitungsschritte durchzuführen. In letzterem Fall liegt das Rezept vorzugsweise in einer von der Küchenmaschine interpretierbaren Form vor, insbesondere digital und/oder als Programm.

Die vorgenannten Aspekte, Merkmale und Verfahrensschritte sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination bzw. Reihenfolge realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine perspektivische Ansicht eines vorschlagsgemäßen Elektromotors;
- Fig. 2: eine Explosionsdarstellung des Elektromotors gemäß Fig. 1;
- Fig. 3: einen Schnitt des Elektromotors gemäß Fig. 1;
- Fig. 4: eine perspektivische Darstellung eines Rotors des Elektromotors gemäß Fig. 1;
- Fig. 5: eine Draufsicht des vorschlagsgemäßen Lüfterrads von unten;
- Fig. 6: eine Draufsicht des vorschlagsgemäßen Lüfterrads von oben;
- Fig. 7: eine perspektivische Darstellung des vorschlagsgemäßen Lüfterrads von unten;
- Fig. 8: eine perspektivische Darstellung des vorschlagsgemäßen Lüfterrads von oben;
- Fig. 9: eine Seitenansicht des vorschlagsgemäßen Lüfterrads;
- Fig. 10: einen Schnitt des Lüfterrads im Bereich seines Außenrands;
- Fig. 11: eine Vergrößerung des Schnitts gemäß Fig. 3 im Bereich einer äußeren Speiche des Lüfterrads;
- Fig. 12: eine schematische Darstellung von Kennlinien des Elektromotors;
- Fig. 13: eine schematische Darstellung einer vorschlagsgemäßen Küchenmaschine mit einem Elektromotor; und
- Fig. 14: eine perspektivische Darstellung eines Werkzeugs der Küchenmaschine.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird.

Zur besseren Übersichtlichkeit sind bei gleichen Bauteilen und Komponenten innerhalb einer Figur nicht alle Bauteile/Komponenten mit einem Bezugszeichen versehen.

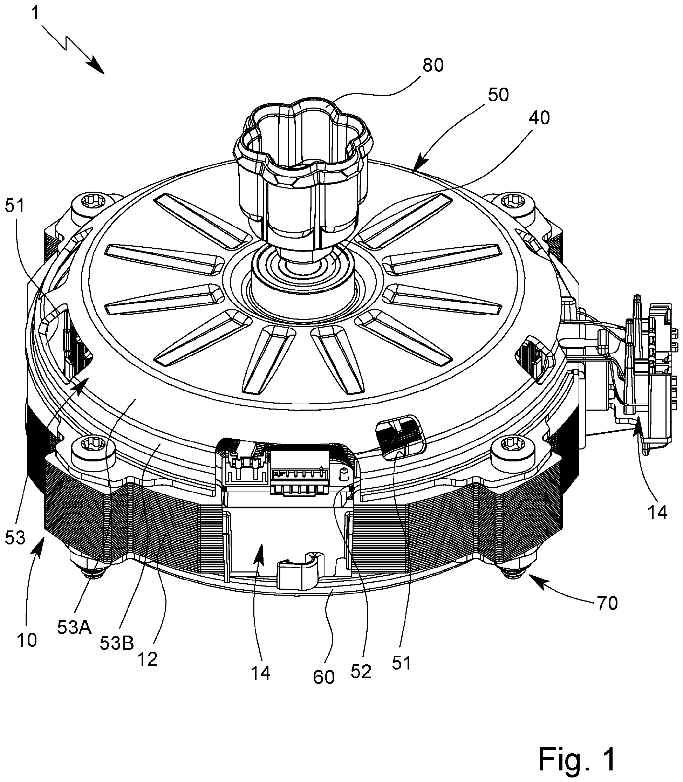

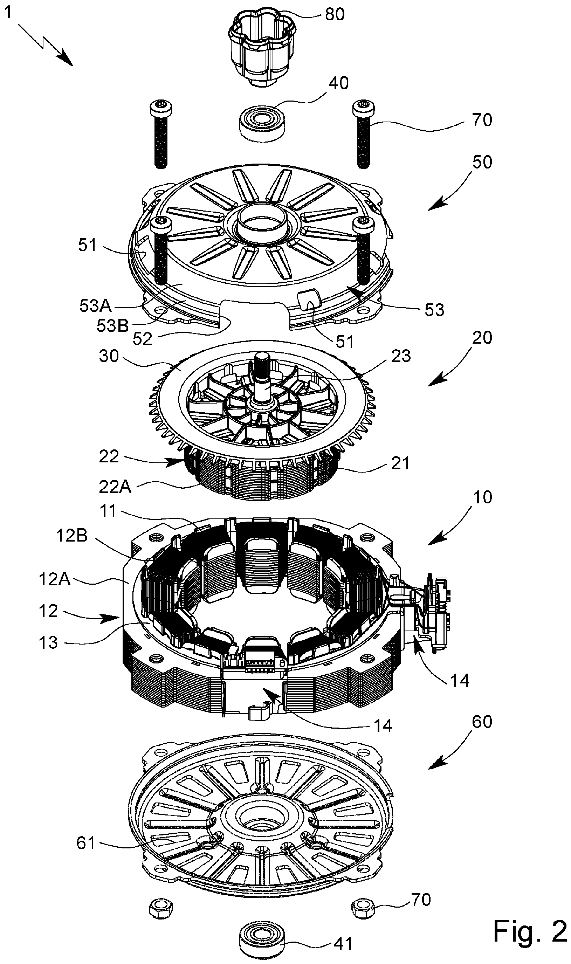

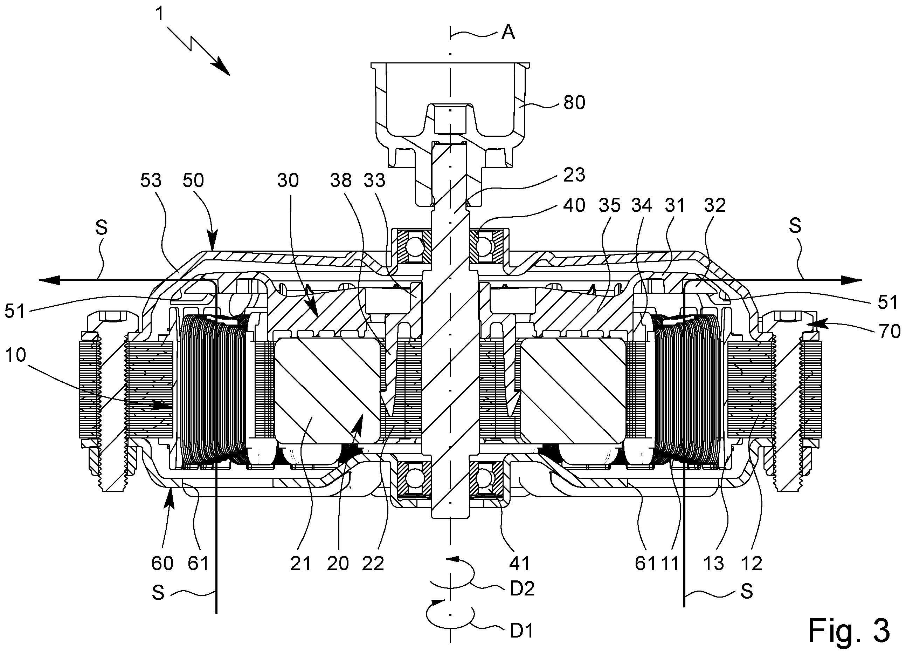

Fig. 1 zeigt einen vorschlagsgemäßen Elektromotor 1 in einer schematischen, perspektivischen Darstellung. Fig. 2 zeigt den Elektromotors 1 in einer schematischen Explosionsdarstellung. Fig. 3 zeigt einen schematischen Querschnitt des Elektromotors 1.

Bei der dargestellten Ausführungsform ist der Elektromotor 1 als bürstenloser Gleichstrommotor (BLDC-Motor) ausgebildet. Es sind jedoch grundsätzlich auch andere Lösungen möglich. Insbesondere könnte das vorschlagsgemäße Lüfterrad auch bei einem Reluktanzmotor, insbesondere einem geschalteten Reluktanzmotor (SR-Motor), verwendet werden und vorteilhaft sein.

Der vorschlagsgemäße Elektromotor 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, besonders bevorzugt kleiner oder gleich 1 U/min, und/oder ist die maximale Drehzahl größer als 2000, 5000 oder 8000 U/min, insbesondere größer oder gleich 10.000 U/min, besonders bevorzugt größer oder gleich 12.000 U/min, ganz besonders bevorzugt größer oder gleich 15.000 U/min.

Der Elektromotor 1 weist einen (feststehenden) Stator/Ständer 10 und einen (rotierenden/rotierbaren) Rotor/Läufer 20 auf, wobei der Rotor 20 um eine Rotationsachse A relativ zum Stator 10 drehbar ist.

Wie bereits eingangs erwähnt, beziehen sich Begriffe wie "axial", "radial" und dergleichen vorzugsweise auf die Rotationsachse A.

Der Rotor 20 ist in einer ersten Drehrichtung D1 und einer zweiten Drehrichtung D2 um die Rotationsachse A (relativ zum Stator 10) drehbar. Hierbei ist die zweite Drehrichtung D2 der ersten Drehrichtung D1 entgegensetzt. Beim Darstellungsbeispiel ist in üblicher Gebrauchslage des Elektromotors 1 die erste Drehrichtung im Uhrzeigersinn bzw. ein Rechtslauf und die zweite Drehrichtung gegen den Uhrzeigersinn bzw. ein Linkslauf, wie in den Fig. 1 bis 3 dargestellt.

Der Elektromotor 1 ist vorzugsweise sowohl in der ersten Drehrichtung D1 als auch der zweiten Drehrichtung D2, insbesondere sowohl im Rechtslauf als auch im Linkslauf, betreibbar.

Beim Darstellungsbeispiel ist der Elektromotor 1 als Innenläufer-Motor ausgebildet bzw. ist der Rotor 20 zumindest teilweise innerhalb des Stators 10 angeordnet. Prinzipiell ist es jedoch auch möglich, den vorschlagsgemäßen Elektromotor 1 als Au-ßenläufer-Motor auszubilden (nicht dargestellt).

Der Stator 10 weist vorzugsweise mehrere, hier zwölf, Wicklungen/Spulen 11, einen Statorkern 12, einen Spulenträger 13 und/oder eine Anschlusseinrichtung 14 auf.

Der Statorkern 12 ist vorzugsweise zumindest im Wesentlichen ringförmig oder ringartig ausgebildet. Insbesondere weist der Statorkern 12 eine zentrale Öffnung für den Rotor 20 auf. Die Rotationsachse A entspricht vorzugsweise der Symmetrie- bzw. Ringachse des Stators 10 bzw. Statorkerns 12.

Vorzugsweise umfasst der Statorkern 12 mehrere gestapelte Elektrobleche bzw. Statorbleche 12A oder ist daraus gebildet.

Der Statorkern 12 bzw. die Statorbleche 12A bildet/bilden vorzugsweise mehrere, hier zwölf, Statorzähne bzw. Spulenabschnitte 12B, wobei jede Wicklung/Spule 11 um einen Spulenabschnitt/Statorzahn 12B gewickelt ist und/oder sich jeweils ein Spulenabschnitt/Statorzahn 12B durch eine Spule 11 hindurch erstreckt.

Vorzugsweise ist der Spulenträger 13 vorgesehen, der die Spulen 11 trägt. Der Spulenträger 13 kann einstückig ausgebildet sein, beispielsweise durch Anspritzen an den Statorkern 12. Alternativ kann der Spulenträger 13 mehrteilig ausgebildet sein.

Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 vorzugsweise mit Strom versorgt werden bzw. eine Stromquelle an den Elektromotor 1 angeschlossen werden. Alternativ oder zusätzlich können ein oder mehrere Sensoren an die Anschlusseinrichtung 14 anschließbar sein, um Messgrößen des Elektromotors 1 zu messen, beispielsweise eine Motor-Temperatur und/oder einen Drehwinkel des Rotors 20.

Beim Darstellungsbeispiel sind zwei Anschlusseinrichtungen 14 vorgesehen, jeweils eine für die Stromversorgung (in Fig. 1 rechts) und eine für Sensoren (in Fig. 1 vorne). Es ist auch möglich, nur eine Anschlusseinrichtung 14 für sowohl die Stromversorgung als auch Sensoren vorzusehen.

Die Anschlusseinrichtung(en) 14 ist/sind vorzugsweise radial außen am Stator 10 angeordnet und/oder zumindest teilweise einstückig mit dem Spulenträger 13 gebildet.

Der dargestellte und beschriebene Stator 10 ist nur beispielhaft. Insbesondere kann das vorschlagsgemäße Lüfterrad auch mit einem anders ausgebildeten Stator verwendet werden und vorteilhaft sein.

Der Elektromotor 1 weist vorzugsweise ein, insbesondere scheiben- bzw. ringförmiges, Lager 40, 41 auf.

Der Rotor 20, insbesondere eine Welle 23 des Rotors 20, ist vorzugsweise am Lager 40, 41 drehbar gelagert. Vorzugsweise ist das Lager 40, 41 mit der Welle 23 verpresst oder verklebt.

Beim Darstellungsbeispiel weist der Elektromotor 1 vorzugsweise zwei, insbesondere baugleiche, Lager 40, 41 auf, nämlich ein oberes Lager 40 und ein unteres Lager 41, die vorzugsweise an axial gegenüberliegenden Seiten des Rotors 20 bzw. der Welle 23 angeordnet sind. Prinzipiell wäre es aber auch möglich, den Rotor 20 nur einseitig zu lagern.

Der Elektromotor 1 weist vorzugsweise ein Lagerschild bzw. eine Lagerbrücke 50, 60 für das Lager 40, 41 auf, insbesondere für jedes Lager 40, 41 jeweils eine Lagerbrücke 50, 60.

Vorzugsweise weist der Elektromotor 1 zwei Lagerbrücken 50, 60 auf, nämlich eine obere Lagerbrücke 50 und eine untere Lagerbrücke 60. Das obere Lager 40 ist der oberen Lagerbrücke 50 zugeordnet und das untere Lager 41 der unteren Lagerbrücke 60.

Die (obere/untere) Lagerbrücke 50, 60 ist vorzugsweise zumindest im Wesentlichen flach, scheibenförmig, schildförmig und/oder ufo-förmig ausgebildet. Insbesondere ist die (obere/untere) Lagerbrücke 50, 60 zumindest im Wesentlichen rund bzw. in einer Draufsicht zumindest im Wesentlichen kreisscheibenförmig ausgebildet.

Die Lagerbrücke 50, 60 bildet vorzugsweise ein (Außen-)Gehäuse des Elektromotors 1 oder einen Teil eines (Außen-)Gehäuses. Besonders bevorzugt bilden die obere Lagerbrücke 50 und die untere Lagerbrücke 60 gemeinsam ein (Außen-)Gehäuse des Elektromotors 1. In diesem Sinne kann die Lagerbrücke 50, 60 auch als ein Gehäuseteil verstanden bzw. bezeichnet werden, insbesondere die obere Lagerbrücke 50 als ein oberes Gehäuseteil und/oder die untere Lagerbrücke 60 als ein unteres Gehäuseteil.

Die Lagerbrücken 50, 60 weisen vorzugsweise Lüftungsöffnungen 51, 61 auf. Insbesondere weist die untere Lagerbrücke 60 (ausschließlich) axiale Lüftungsöffnungen 61 und/oder die obere Lagerbrücke 50 (ausschließlich) radiale Lüftungsöffnungen 51 auf.

Die obere Lagerbrücke 50 kann zusätzliche radiale Aussparungen 52 aufweisen, insbesondere für die Anschlusseinrichtungen 14.

Die radialen Lüftungsöffnungen 51 und/oder radialen Aussparungen 52 sind vorzugsweise in einem umlaufenden Randabschnitt 53 der Lagerbrücke 50 gebildet. Der Randabschnitt 53 erstreckt sich vorzugsweise schräg zur Rotationsachse A und/oder ist zumindest im Wesentlichen kegelstumpfförmig.

Beim Darstellungsbeispiel weist der Randabschnitt 53 vorzugsweise zwei unterschiedlich schräge Abschnitte 53A, 53B auf, insbesondere einen oberen schrägen Abschnitt 53A und einen unteren schrägen Abschnitt 53B. Vorzugsweise bedeutet "oben" hierbei vom Statorkern 12 abgewandt und "unten" dem Statorkern 12 zugewandt.

Der Abschnitt 53B hat vorzugsweise eine größere Steigung als der Abschnitt 53A. Insbesondere weist der Abschnitt 53B eine größere axiale Komponente auf bzw. verläuft der zweite Abschnitt 53B mehr in axialer Richtung als der erste Abschnitt 53A.

Vorzugsweise erstrecken sich die Lüftungsöffnungen 51 sowohl über den ersten Abschnitt 53A als auch den zweiten Abschnitt 53B des Randabschnitts 53.

Zur Befestigung der Lagerbrücke(n) 50, 60 weist der Elektromotor 1 vorzugsweise eine oder mehrere Befestigungseinrichtungen 70, beim Darstellungsbeispiel vorzugsweise Schrauben und/oder Muttern, auf. Die Lagerbrücke(n) 50, 60 ist/sind vorzugsweise am Stator 10 bzw. Statorkern 12 befestigt, insbesondere mittels der Befestigungseinrichtung(en) 70.

Optional kann der Elektromotor 1 einen Aufsatz 80 aufweisen, der drehfest mit der Welle 23 verbunden, insbesondere auf die Welle 23 aufgesteckt, ist. Über den Aufsatz 80 kann vorzugsweise die Drehbewegung des Rotors 20 auf ein Werkzeug übertragen werden, das von dem Elektromotor 1 angetrieben werden soll, worauf später noch genauer eingegangen wird.

Es ist aber auch möglich, dass das Werkzeug direkt mit der Welle 23 verbunden wird.

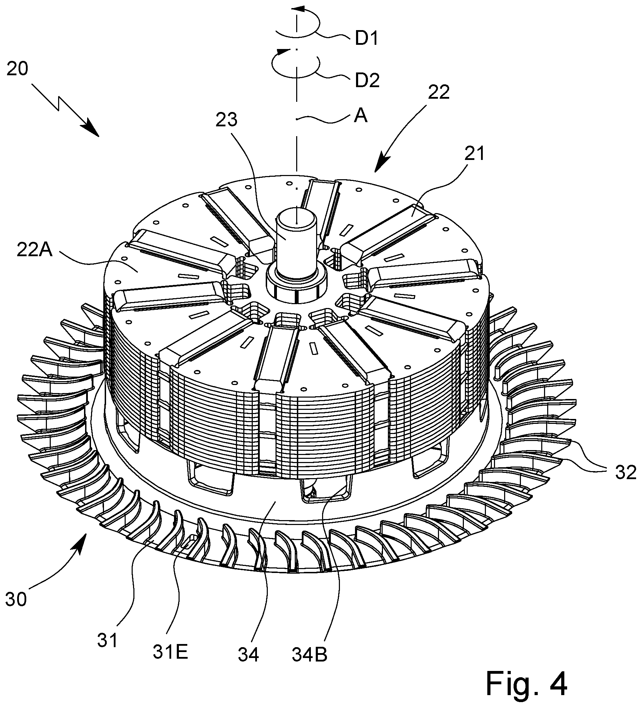

Fig. 4 zeigt den Rotor 20 in einer schematischen, perspektivischen Ansicht.

Beim Darstellungsbeispiel gemäß Fig. 1 bis 4 weist der Rotor 20 vorzugsweise mehrere, hier zehn, Permanentmagnete 21, einen Rotorkern 22, eine Welle 23 und/oder ein Lüfterrad 30 auf.

Die Permanentmagnete 21 sind vorzugsweise im Rotorkern 22 angeordnet bzw. eingebettet.

Die Permanentmagnete 21 sind vorzugweise sternförmig im Rotor 20 bzw. Rotorkern 22 und/oder um die Welle 23 bzw. Rotationsachse A herum angeordnet und/oder erstrecken sich bzw. haben eine Haupt-/Längserstreckung - bezogen auf die Welle 23 bzw. Rotationsachse A - in radialer Richtung.

Die Permanentmagnete 21 sind vorzugsweise gleichmäßig über einen Kreisumfang verteilt. Benachbarte Permanentmagneten 21 schließen also vorzugsweise einen Winkel von 360° geteilt durch die Anzahl der Permanentmagnete 21 ein.

Grundsätzlich können die Permanentmagnete 21 auch anders als im Darstellungsbeispiel geformt und/oder angeordnet sein, beispielsweise mit einer Längserstreckung in Umfangsrichtung oder senkrecht/tangential zur radialen Richtung.

Der Rotorkern 22 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 22.

Der Rotorkern 22 ist auf der Welle 23 befestigt, insbesondere kraft-, form- und/oder stoffschlüssig mit der Welle 23 verbunden.

Vorzugsweise umfasst der Rotorkern 22 mehrere gestapelte Elektrobleche bzw. Rotorbleche 22A oder ist daraus gebildet.

Das Lüfterrad 30, insbesondere eine Nabe 33 des Lüfterrads 30, ist vorzugsweise an der Welle 23 befestigt, insbesondere kraft-, form- und/oder stoffschlüssig. Zusätzlich oder alternativ kann das Lüfterrad 30 an dem Rotorkern 22 befestigt sein, insbesondere kraft-, form- und/oder stoffschlüssig. Auch ist es möglich, dass das Lüfterrad 30 an den Rotorkern 22 und/oder die Welle 23 angespritzt ist.

Das Lüfterrad 30 ist dazu ausgebildet, warme Luft vom Elektromotor 1 (in die Umgebung) wegzutransportieren und/oder kühle Luft (aus der Umgebung) dem Elektromotor 1 zuzuführen.

Als Teil des Rotors 20 rotiert das Lüfterrad 30 bei Betrieb des Elektromotors 1 um die Rotationsachse A und kann so entsprechend Luft fördern, worauf später noch genauer eingegangen wird.

Wie bereits eingangs erwähnt, beziehen sich Begriffe wie "oben", "unten" und dergleichen vorzugsweise auf die Erstreckung der Rotationsachse A und/oder die bevorzugte Ausrichtung des Elektromotors 1 im eingebauten Zustand bzw. in Gebrauchslage, insbesondere in einer Küchenmaschine 100.

Bei dem vorliegenden Elektromotor 1 ist die bevorzugte Gebrauchslage derart, dass das Lüfterrad 30 axial oberhalb des Rotorkerns 22 bzw. Stators 10 angeordnet ist, wie in Fig. 2 und Fig. 3 dargestellt. Dementsprechend ist die in Fig. 4 gewählte Darstellung des Rotor 20 vorzugsweise eine Darstellung von unten. Prinzipiell sind jedoch auch andere Gebrauchslagen bzw. Einbausituationen denkbar.

Die in den Fig. 2 und 3 dargestellten Drehrichtungen D1, D2 in üblicher Gebrauchslage des Elektromotors 1 sind auch in Fig. 4 dargestellt. Da die Darstellung in Fig. 4 vorzugsweise nicht der üblichen Gebrauchslage entspricht, sondern den Rotor 20 von unten zeigt, ergibt sich folglich, dass in dieser Ansicht beim Darstellungsbeispiel die erste Drehrichtung D1 gegen den Uhrzeigersinn und die zweite Drehrichtung D2 im Uhrzeigersinn verläuft.

Der dargestellte und beschriebene Rotor 20 ist nur beispielhaft. Insbesondere kann der Elektromotor 1 auch als (geschalteter) Reluktanzmotor ausgebildet sein, wie eingangs erwähnt. Der Rotor 20 ist dann entsprechend ausgebildet, weist bei einem Reluktanzmotor beispielsweise keine Permanentmagneten auf.

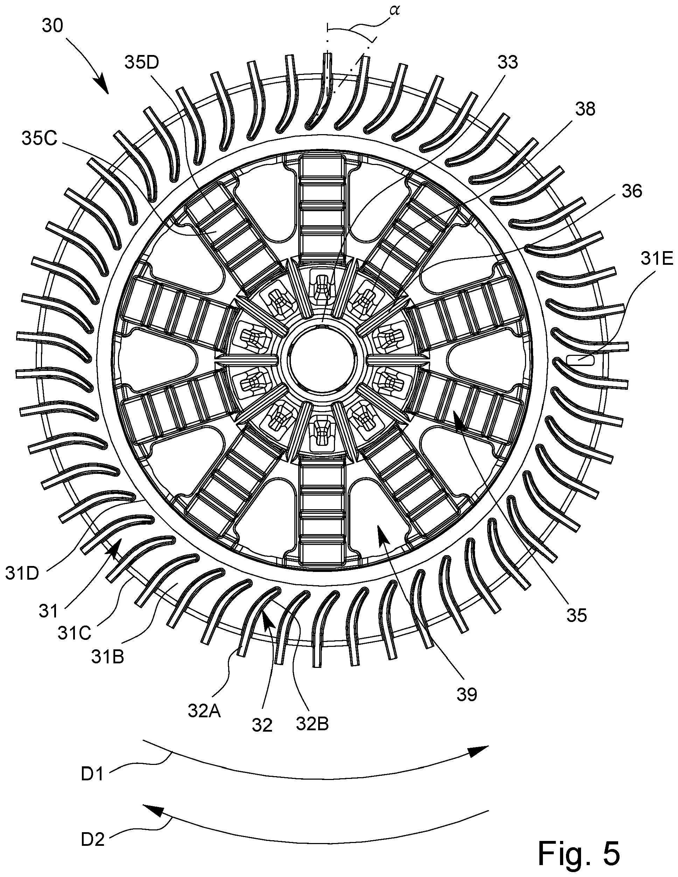

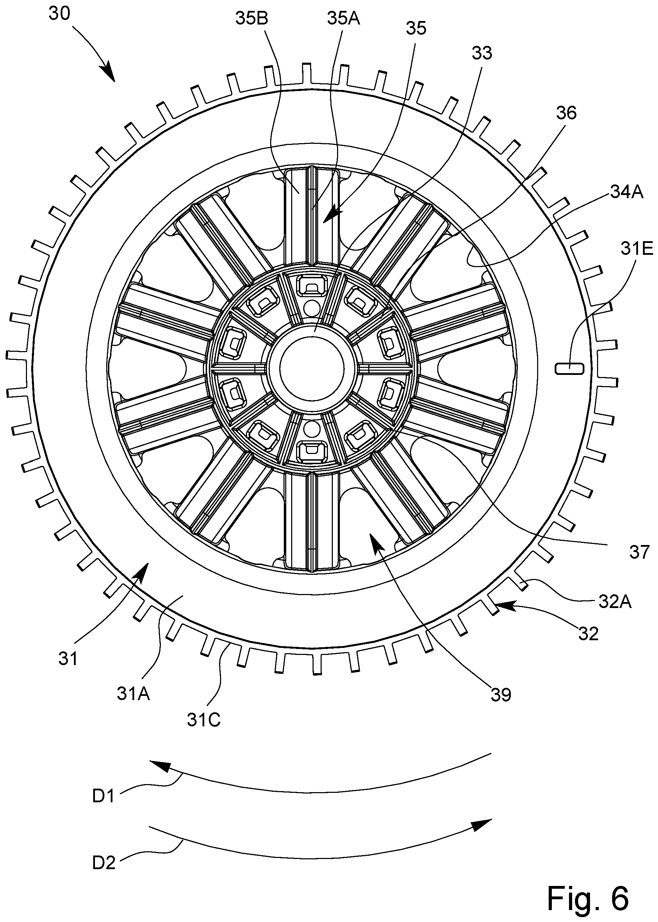

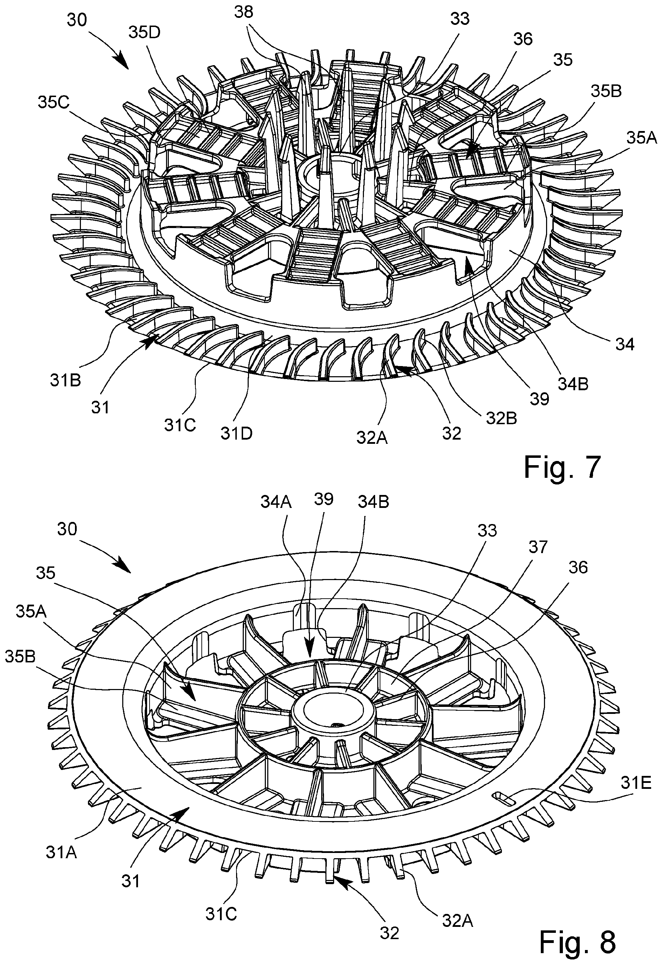

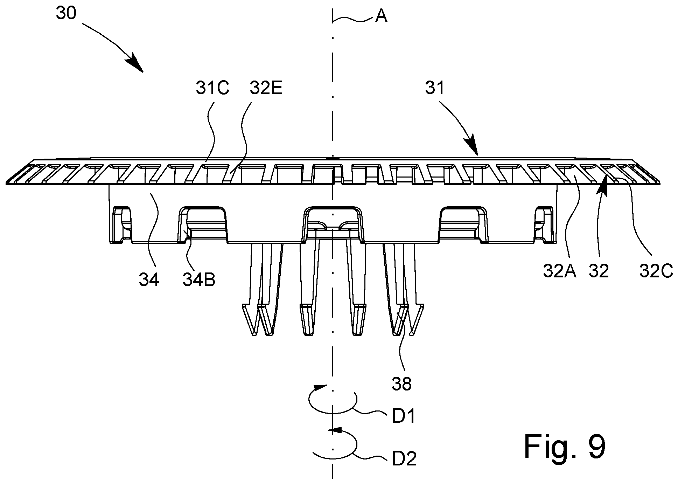

Das vorschlagsgemäße Lüfterrad 30 ist in den Figuren 5 und 6 in schematischen Draufsichten und in Figuren 7 und 8 in schematischen, perspektivischen Ansichten von unterschiedlichen Seiten näher dargestellt. Insbesondere zeigen Fig. 5 und Fig. 7 das Lüfterrad 30 von unten und Fig. 6 und Fig. 8 das Lüfterrad 30 von oben, jeweils in einer planaren und einer perspektivischen Ansicht. Fig. 9 zeigt das vorschlagsgemäße Lüfterrad 30 in einer schematischen Seitenansicht.

Das Lüfterrad 30 weist vorzugsweise eine Rotationsachse, zentrale Achse und/oder Symmetrieachse auf, die (im montierten Zustand) insbesondere mit der Rotationsachse A des Rotors 20 identisch ist. Nachfolgend wird daher die Bezeichnung "Rotationsachse A" auch für die Rotationsachse, zentrale Achse und/oder Symmetrieachse des Lüfterrads 30 verwendet.

Vorzugsweise ist das Lüfterrad 30 um seine Rotationsachse, zentrale Achse und/oder Symmetrieachse, insbesondere um die Rotationsachse A des Rotors 20, drehbar bzw. rotierbar, insbesondere sowohl in die erste Drehrichtung D1 als auch die zweite Drehrichtung D2. Die in den Fig. 1 bis 4 dargestellten Drehrichtungen D1, D2 sind auch in den Fig. 5, 6 und 9 entsprechend gezeigt.

Vorzugsweise ist das Lüfterrad 30 einstückig gebildet, insbesondere spritzgegossen.

Vorzugsweise ist das Lüfterrad 30 aus Kunststoff hergestellt und/oder besteht aus Kunststoff, insbesondere aus Polyamid, besonders bevorzugt Polyamid vom Typ PA6. Bevorzugt enthält der Kunststoff, insbesondere das Polyamid, Glas bzw. Glasfasern bzw. ist damit verstärkt. Der Glasanteil ist vorzugsweise größer als 20 % oder 25 % und/oder kleiner als 40 % oder 35 %. Besonders bevorzugt beträgt der Glasanteil etwa 30 %. Ganz besonders bevorzugt ist das Lüfterrad 30 aus Polyamid 6 mit 30 % Glasfaser, auch bekannt unter der Abkürzung PA6 GF30, hergestellt bzw. besteht daraus.

Das Lüfterrad 30 ist vorzugsweise scheibenartig oder plattenartig geformt und/oder zumindest im Wesentlichen ringförmig bzw. radförmig ausgebildet und/oder rotationsymmetrisch, insbesondere zur Rotationsachse A.

Das Lüfterrad 30 weist vorzugsweise einen Tragkörper bzw. Grundkörper 31 und mehrere Flügel bzw. Lamellen bzw. Schaufeln 32 auf.

Ferner weist das Lüfterrad 30 vorzugsweise eine Nabe 33, eine zylindrische Wandung 34 und/oder Speichen bzw. Streben 35, 36 auf.

Die Nabe 33 ist vorzugsweise mittig bzw. zentral am Lüfterrad 30 gebildet und/oder konzentrisch zur Rotationsachse A des Rotors 20 bzw. zur Rotationsachse bzw. Symmetrieachse bzw. zentralen Achse des Lüfterrads 30 angeordnet.

Die Nabe 33 hat vorzugsweise die Form eines (Hohl-)Zylinders. Insbesondere bildet die Rotationsachse A die Zylinderachse der Nabe 33.

Die Welle 23 ragt vorzugsweise durch die Nabe 33 hindurch und/oder ist vorzugsweise mit der Nabe 33 drehfest verbunden. Insbesondere ist die Nabe 33 zur Verbindung des Lüfterrads 30 mit dem Rotor 20, insbesondere der Welle 23, ausgebildet.

Vorzugsweise ist das Lüfterrad 30 mittels der Nabe 33 auf die Welle 23 aufgesteckt.

Der Tragkörper 31 ist vorzugsweise ringförmig, radförmig, flächig, flanschartig, scheibenartig und/oder plattenartig ausgebildet. Insbesondere erstreckt sich der Tragkörper 31 vorzugsweise zumindest im Wesentlichen radial zur Rotationsachse A bzw. in einer zur Rotationsachse A zumindest im Wesentlichen orthogonalen Ebene.

Beim Darstellungsbeispiel erstreckt sich der Tragkörper 31 vorzugsweise von der zylindrischen Wandung 34 bzw. den Speichen 35, 36 radial nach außen. Es sind aber auch Lösungen möglich, bei denen sich der Tragkörper 31 von der Nabe 33 radial nach außen erstreckt bzw. bei denen auf eine zylindrische Wandung 34 und/oder Speichen 35, 36 verzichtet wird.

Der Tragkörper 31 ist vorzugsweise ein flacher Ring und/oder konzentrisch zur Rotationsachse A bzw. zur Nabe 33 angeordnet. Vorzugsweise erstreckt sich der Tragkörper 31 vollständig um die Rotationsachse A bzw. die Nabe 33 herum.

Der Tragkörper 31 weist vorzugsweise eine erste axiale Flachseite bzw. Axialseite 31A und eine zweite axiale Flachseite bzw. Axialseite 31B auf.

Unter einer axialen Seite bzw. Axialseite ist vorzugsweise eine Seite bzw. Fläche zu verstehen, deren Flächennormale (zumindest im Wesentlichen) in die axiale Richtung bzw. parallel zur Rotationsachse A verläuft. Entsprechend ist unter einer radialen Seite bzw. Radialseite vorzugsweise eine Seite bzw. Fläche zu verstehen, deren Flächennormale (zumindest im Wesentlichen) in die radiale Richtung verläuft.

In üblicher Gebrauchslage des Elektromotors 1 bildet die erste Axialseite 31A eine Oberseite des Tragkörpers 31 und die zweite Axialseite 31B eine Unterseite des Tragkörpers 31.

Vorzugsweise ist die zweite Axialseite 31B die dem Rotorkern 22 zugewandte Seite und/oder die erste Axialseite 31A die dem Rotorkern 22 abgewandte Seite des Tragkörpers 31.

Die Schaufeln 32 sind vorzugsweise auf einer der Axialseiten 31A, 31B angeordnet bzw. gebildet, insbesondere der zweiten Axialseite 31B bzw. Unterseite. Auf der anderen Axialseite 31B, 31A, insbesondere der ersten Axialseite 31A bzw. Oberseite ist der Tragkörper 31 vorzugsweise frei von Schaufeln.

Vorzugsweise weisen die Schaufeln 32 jeweils ein (radial) äußeres Ende 32A und ein (radial) inneres Ende 32B auf. Unter dem "äußeren Ende" ist hierbei vorzugsweise der von der Rotationsachse A bzw. Nabe 33 am weitesten entfernte Abschnitt der Schaufel 32 zu verstehen und unter dem "inneren Ende" vorzugsweise der der Rotationsachse A bzw. Nabe 33 am nächsten liegende Abschnitt der Schaufel 32.

Die Schaufeln 32 erstrecken sich vorzugsweise jeweils von ihrem inneren Ende 32B zu ihrem äußeren Ende 32A.

Die Haupterstreckungsrichtung der Schaufeln 32 bzw. die Erstreckungsrichtung vom inneren Ende 32B zum äußeren Ende 32A ist vorzugsweise im Wesentlichen die radiale Richtung. Die Schaufeln 32 erstrecken sich also vorzugsweise zumindest im Wesentlichen in radialer Richtung. Die Schaufeln 32 können jedoch, insbesondere an ihrem inneren Ende 32B, von der radialen Richtung abweichen, wie noch näher erläutert wird.

Die Schaufeln 32 sind vorzugsweise rippenartig oder lamellenartig bzw. als Rippen oder Lamellen ausgebildet.

Vorzugsweise sind die Schaufeln 32 strahlenartig oder sternförmig um die Rotationsachse A bzw. um die Nabe 33 herum bzw. strahlenartig oder sternförmig auf dem Tragkörper-Umfang angeordnet.

Die Schaufeln 32 sind vorzugsweise über den Umfang des Lüfterrads 30 bzw. Tragkörpers 31 gleichmäßig verteilt.

Die Anzahl der Schaufeln 32 beeinflusst vorzugsweise die Luftführung bzw. den Volumenstrom der geförderten Luft. Einerseits wir die Luftführung durch mehr Schaufeln verbessert, was sich positiv auf den Volumenstrom auswirkt. Andererseits erhöht sich durch die Schaufelanzahl auch die Reibung an Wandungen der Schaufeln, was sich negativ auf den Volumenstrom auswirkt. Eine zu niedrige oder zu hohe Schaufelanzahl ist daher nachteilig.

Die Anzahl der Schaufeln 32 ist vorzugsweise so gewählt, dass der Volumenstrom der vom Lüfterrad 30 geförderten Luft möglichst groß ist.

Die Anzahl der Schaufeln 32 ist vorzugsweise größer als 30, insbesondere größer als 40, und/oder kleiner als 70, insbesondere kleiner als 60. Bei der dargestellten, bevorzugten Ausführung beträgt die Schaufelanzahl vorzugsweise 50.

Zwischen zwei Schaufeln 32 ist vorzugsweise jeweils ein (Luft-)Kanal gebildet, der vorzugsweise entsprechend im Wesentlichen radial verläuft. Die Anzahl der Kanäle ist gleich der Anzahl an Schaufeln 32.

Jeder Kanal ist vorzugsweise seitlich bzw. in Umfangsrichtung bzw. in die beiden Drehrichtungen D1, D2 von zwei Schaufeln 32 begrenzt und axial bzw. von oben durch den Tragkörper 31. In die andere axiale Richtung bzw. nach unten und/oder in radialer Richtung sind die Kanäle vorzugsweise offen.

Vorzugsweise sind die Schaufeln 32 bzw. deren innere Enden 32B in die erste Drehrichtung D1 gekrümmt bzw. gebogen, wie insbesondere in Fig. 5 und Fig. 7 dargestellt. Die inneren Enden 32B können deshalb vorzugsweise auch als gebogener (End-)Abschnitt der jeweiligen Schaufel 32 bezeichnet werden.

Vorzugsweise sind alle Schaufeln 32 gleich gekrümmt bzw. gebogen.

Die erste Drehrichtung D1 ist vorzugsweise durch die Krümmung bzw. Biegung der Schaufeln 32 definiert. Unter der ersten Drehrichtung D1 ist also vorzugsweise die Richtung zu verstehen, in die die Schaufeln 32 bzw. deren innere Enden 32B gebogen bzw. gekrümmt sind. Selbstverständlich sind auch Ausführungsformen möglich, bei denen die Schaufeln 32 entgegengesetzt zu der in den Figuren dargestellten Drehrichtung gekrümmt/gebogen sind (beispielsweise in Fig. 5 im Uhrzeigersinn statt gegen den Uhrzeigersinn).

Vorzugsweise verlaufen die äußeren Enden 32A der Schaufeln 32 radial oder zumindest im Wesentlichen radial bzw. geradlinig bzw. weisen keine Krümmung/Biegung auf. Die äußeren Enden 32A können deshalb vorzugsweise auch als geradliniger oder radialer (End-)Abschnitt der jeweiligen Schaufel 32 bezeichnet werden.

Der gebogene Abschnitt / das innere Ende 32B geht vorzugsweise kontinuierlich bzw. knickfrei in den geradlinigen/radialen Abschnitt / das äußere Ende 32A über.

Vorzugsweise sind der geradlinige Abschnitt / das äußere Ende 32A und der gebogene Abschnitt / das innere Ende 32B etwa gleich lang bzw. haben die gleiche radiale Erstreckung und/oder Längserstreckung.

Vorzugsweise schließt das innere Ende 32B mit der radialen Richtung und/oder mit dem äußeren Ende 32A einen (spitzen) Winkel α ein, wie in Fig. 5 dargestellt. Der Winkel α beträgt vorzugsweise mehr als 30°, insbesondere mehr als 35° oder 40°, und/oder weniger als 60°, insbesondere weniger als 55° oder 50°. Besonders bevorzugt beträgt der Winkel α etwa 45°.

Für die zwischen den Schaufeln 32 gebildeten Kanäle gilt vorzugsweise entsprechendes. Insbesondere haben die Kanäle ein in die erste Drehrichtung D1 gebogenes inneres Ende und/oder ein geradlinig/radial verlaufendes äußeres Ende bzw. entsprechend einen gebogenen und/oder einen geradlinigen/radialen (End-)Abschnitt, insbesondere wobei das äußere Kanalende mit der radialen Richtung den Winkel α einschließt.

In axialer Richtung verlaufen die Schaufeln 32 vorzugsweise ungebogen/ungekrümmt bzw. geradlinig, insbesondere sowohl das äußere Ende 32A als auch das innere Ende 32B. Insbesondere erstrecken sich die Schaufeln 32 vorzugsweise zumindest im Wesentlichen orthogonal zum Tragkörper 31 bzw. dessen Axialseite 32B, insbesondere über die gesamte axiale Erstreckung bzw. gesamte Höhe der Schaufeln 32.

Die Breite der Schaufeln 32, insbesondere also ihre Erstreckung orthogonal zur Längserstreckung, ist vorzugsweise zumindest im Wesentlichen konstant.

Vorzugsweise ragen die Schaufeln 32, insbesondere deren äußere Enden 32A, über den Tragkörper 31 bzw. einen Außenrand 31C des Tragkörpers 31 hinaus. Der Außenrand 31C bildet vorzugsweise den äußeren Umfang des (ringförmigen) Tragkörpers 31.

Vorzugsweise ragt etwa ein Viertel bis ein Drittel der jeweiligen Schaufel 32 über den Tragkörper 31 bzw. dessen Außenrand 31C hinaus.

Vorzugsweise ragt die Schaufel 32 bzw. das äußere Ende 32A mit mindestens 2 mm oder mindestens 3 mm, insbesondere mit mindestens 4 mm, und/oder mit höchstens 8 mm oder 7 mm, insbesondere mit höchstens 6 mm, über den Tragkörper 31 bzw. dessen Außenrand 31C hinaus.

Das innere Ende 32B bzw. der gebogene Abschnitt der jeweiligen Schaufel 32 ist vorzugsweise vollständig auf dem Tragkörper 31 angeordnet bzw. steht nicht über.

Besonders bevorzugt sind die inneren Enden 32B der Schaufeln 32 von einem Innenrand 31D des Tragkörpers 31 und/oder von der zylindrischen Wandung 34 beabstandet. Mit anderen Worten erstrecken sich die Schaufeln 32 vorzugsweise nicht über die gesamte radiale Erstreckung des Tragkörpers 31.

Der Innenrand 31D bildet vorzugsweise den inneren Umfang des (ringförmigen) Tragkörpers 31. Insbesondere ist der Innenrand 31D am Übergang vom Tragkörper 31 zur zylindrischen Wandung 34 gebildet.

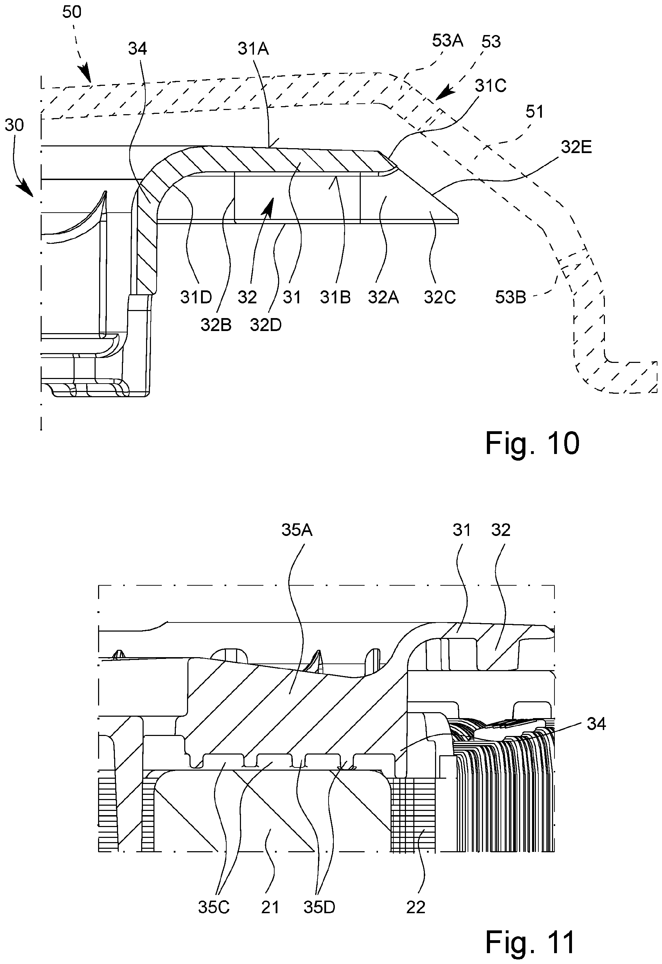

Vorzugsweise verjüngen sich die Schaufeln 32 bzw. deren äußere Enden 32A und/oder bilden eine Spitze 32C, wie beispielsweise in Fig. 9 und Fig. 10 dargestellt.

Fig. 10 zeigt ausschnittsweise einen (Vertikal-)Schnitt durch das Lüfterrad 30 im Bereich des Tragkörpers 31. Der Schnitt verläuft hierbei zwischen zwei Schaufeln 32. Ferner ist in Fig. 10 gestrichelt ein Abschnitt der oberen Lagerbrücke 50 dargestellt, um die bevorzugte relative Lage zwischen dem Lüfterrad 30 und der oberen Lagerbrücke 50 zu veranschaulichen.

Vorzugsweise verjüngt sich die Schaufel 32 bzw. deren äußeres Ende 32A vom Außenrand 31C des Tragkörpers 31 aus bzw. verjüngt sich nur der überstehende Abschnitt der Schaufel 32 bzw. bildet der überstehende Abschnitt die Spitze 32C.

Vorzugsweise verringert sich die axiale Erstreckung der Spitze 32C radial nach au-ßen, insbesondere linear bzw. kontinuierlich.

Die Spitze 32C ist in einer Seitenansicht bzw. einem Schnitt vorzugsweise zumindest im Wesentlichen dreiecksförmig.

Die Schaufel 32 weist vorzugsweise eine axiale Kante 32D auf, insbesondere eine Unterkante, die dem Tragkörper 31 gegenüberliegt bzw. von diesem abgewandt ist. Insbesondere erstreckt sich die Schaufel 32 in axialer Richtung vom Tragkörper 31 bzw. dessen Axialseite 32B bis zu seiner axialen Kante 32D.

Die axiale Kante 32D ist vorzugsweise annährend linienförmig bzw. weist nur eine geringe Breite (im Vergleich zu ihrer Länge bzw. radialen Erstreckung) auf. Die axiale Kante 32D ist vorzugsweise entsprechend der Schaufel 32 gebogen.

Vorzugsweise erstreckt sich die axiale Kante 32D vom inneren Ende 32B bis zum äußeren Ende 32A und/oder umfasst auch die Spitze 32C die axiale Kante 32D.

Die axiale Kante 32D hat bevorzugt einen (zumindest im Wesentlichen) konstanten axialen Abstand vom Tragkörper 31 und/oder erstreckt sich (zumindest im Wesentlichen) parallel zu den Axialseiten 31A, 31B des Tragkörpers 31 und/oder liegt in einer zur Rotationsachse A (zumindest im Wesentlichen) orthogonalen Ebene bzw. in üblicher Gebrauchslage in einer Horizontalebene.

Der axiale Abstand der axialen Kante 32D zum Tragkörper 31 bzw. dessen Axialseite 32B bzw. die (maximale) axiale Erstreckung bzw. Höhe der Schaufel 32 (insbesondere ohne Berücksichtigung der Spitze 32C) bzw. eine Luftkanals beträgt vorzugsweise mehr als 1 mm, insbesondere mehr als 2 mm, und/oder weniger als 7 mm oder 6 mm, insbesondere weniger als 5 mm oder 4 mm, besonders bevorzugt etwa 3 mm.

Die Schaufel 32, insbesondere das äußere Ende 32A bzw. die Spitze 32C, weist vorzugsweise eine (radial) äußere Kante 32E auf. Die äußere Kante 32E verläuft vorzugsweise schräg zum Tragkörper 31 bzw. dessen Axialseiten 31A, 31B und/oder zur axialen Kante 32D und/oder zur Rotationsachse A. Sie wird daher im Folgenden als "schräge Kante 32E" bezeichnet.

Vorzugsweise weist nur der überstehende Abschnitt bzw. nur die Spitze 32C die schräge Kante 32E auf.

Die schräge Kante 32E erstreckt sich vorzugsweise vom Tragkörper 31 bzw. dessen Außenrand 31C radial nach außen und/oder axial nach unten.

Die schräge Kante 32E erstreckt sich vorzugsweise vom Außenrand 31C des Tragkörpers 31 bis zur axialen Kante 32D. Insbesondere bildet der Schnittpunkt der Kanten 32D, 32E den radial äußersten Punkt der Schaufel 32.

Die Spitze 32C bildet vorzugsweise einen spitzen Winkel und/oder die axiale Kante 32D und die schräge Kante 32E treffen sich vorzugsweise in einem spitzen Winkel, vorzugsweise einem Winkel von mehr als 30°, insbesondere mehr als 40°, und/oder weniger als 60°, insbesondere weniger als 50°, besonders bevorzugt etwa 45°.

Der Außenrand 31C des Tragkörpers 31 verläuft vorzugsweise schräg zu den Axialseiten 31A, 31B und/oder zur axialen Kante 32D und/oder zur Rotationsachse A, und/oder (zumindest im Wesentlichen) in einer Ebene mit der schrägen Kante 32E und/oder im gleichen Winkel wie die schräge Kante 32E.

Die Lagerbrücke 50 ist ausschnittsweise in Fig. 10 gestrichelt dargestellt.

Der axiale Abstand des Lüfterrads 30, insbesondere der Axialseite 31A des Tragkörpers 31, von der Lagerbrücke 50 beträgt vorzugsweise mindestens 0,5 mm, insbesondere mindestens 0,9 mm, und/oder höchstens 4 mm oder 3,5 mm, insbesondere höchstens 3,3 mm.

Die (maximale) axiale Erstreckung bzw. die Höhe der Schaufeln 32 bzw. der dazwischen gebildeten Luftkanäle beträgt vorzugsweise mindestens etwa ein Drittel und/oder höchstens etwa die Hälfte der axialen Erstreckung bzw. Höhe der Lüftungsöffnungen 51.

Die axiale Kante 32D liegt vorzugsweise etwa in der Mitte der axialen Erstreckung/Höhe der Lüftungsöffnungen 51 und/oder die Schaufeln 32 bzw. Luftkanäle liegen im oberen axialen Bereich der Lüftungsöffnungen 51.

Vorzugsweise sind die Spitze 32C, insbesondere die schräge Kante 32E, und die Lüftungsöffnung 51 bzw. der Randabschnitt 53 der Lagerbrücke 50, in dem die Lüftungsöffnung 51 gebildet ist, zumindest im Wesentlichen parallel zueinander.

Wie bereits eingangs erwähnt, weist beim Darstellungsbeispiel der Randabschnitt 53 bevorzugt zwei unterschiedliche schräge Abschnitte 53A, 53B auf. Die Spitze 32C bzw. schräge Kante 32E ist vorzugsweise zum oberen, schrägen Abschnitt 53A des Randabschnitts 53 (zumindest im Wesentlichen) parallel.

Vorzugsweise verringert bzw. verjüngt sich die Dicke bzw. axiale Erstreckung des Tragkörpers 31 radial nach außen bzw. vom Innenrand 31D zum Außenrand 31C. Mit anderen Worten verringert sich vorzugsweise der Abstand zwischen den Axialseiten 31A und 31B radial nach außen. Dies ist insbesondere in Fig. 10 zu erkennen.

Vorzugsweise verringert/verjüngt sich die Dicke des Tragkörpers 31 bzw. der Abstand der Axialseiten 31A, 31B um mehr als 0,1 mm, insbesondere um mehr als 0,2 mm, und/oder um weniger als 1 mm, insbesondere um weniger als 0,5 mm, besonders bevorzugt um etwa 0,3 mm.

Im Bereich des Innenrands 31D beträgt die Dicke des Tragkörpers 31 bzw. der Abstand der Axialseiten 31A, 31B vorzugsweise mehr als 1 mm, insbesondere mehr als 1,3 mm, und/oder weniger als 2 mm, insbesondere weniger als 1,7 mm, besonders bevorzugt etwa 1,5 mm.

Im Bereich des Außenrands 31C beträgt die (maximale) Dicke des Tragkörpers 31 bzw. der Abstand der Axialseiten 31A, 31B vorzugsweise mehr als 0,8 mm, insbesondere mehr als 1 mm, und/oder weniger als 1,8 mm, insbesondere weniger als 1,4 mm, besonders bevorzugt etwa 1,2 mm.

Der Tragkörper 31 und die Schaufeln 32 bilden vorzugsweise die Außenkontur eines Kegelstumpfs, wie insbesondere in der Seitenansicht gemäß Fig. 9 ersichtlich.

Die zylindrische Wandung 34 erstreckt sich vorzugsweise im Wesentlichen in axialer Richtung und/oder entlang des Innenrands 31D des Tragkörpers 31.

Vorzugsweise ist die zylindrische Wandung 34 konzentrisch zur Rotationsachse A bzw. Nabe 33 angeordnet. Insbesondere bildet die Rotationsachse A die Zylinderachse bzw. Symmetrieachse der zylindrischen Wandung 34.

Die axiale Erstreckung bzw. Höhe der zylindrischen Wandung 34 ist vorzugsweise größer als 6 mm, insbesondere größer als 10 mm, und/oder kleiner als 20 mm, insbesondere kleiner als 15 mm.

Der Tragkörper 31 erstreckt sich vorzugsweise flanschartig und/oder zumindest im Wesentlichen orthogonal von der zylindrischen Wandung 34, insbesondere einem axialen bzw. oberen Ende der zylindrischen Wandung 34.

Der Übergangsbereich zwischen Tragkörper 31 und zylindrischer Wandung 34 und/oder der Innenrand 31D ist vorzugsweise abgerundet, insbesondere an beiden Axialseiten 31A, 31B des Tragkörpers 31.

Die Nabe 33 und/oder die zylindrische Wandung 34 liegen/liegt vorzugsweise direkt (axial) am Rotorkern 22 an, insbesondere mit ihrer unteren bzw. dem Tragkörper 31 abgewandten axialen Seite und/oder über ihren gesamten Umfang, wie insbesondere in Fig. 3 dargestellt. Der Tragkörper 31 ist somit vorzugsweise um die axiale Erstreckung der zylindrischen Wandung 34 von dem Rotorkern 22 beabstandet.

Bei der Montage wird das Lüfterrad 30 vorzugsweise auf die Welle 23 aufgeschoben, bis die Nabe 33 und/oder die zylindrische Wandung 34 an den Rotorkern 22 anschlägt, so dass eine definierte Position des Lüfterrads 30 gewährleistet ist.

Die Schaufeln 32 erstrecken sich vorzugsweise vom Tragkörper 31 axial nach unten bzw. in Richtung des Rotorkerns 22. Generell können sich die Schaufeln 32 axial bis zum Rotorkern 22 oder darüber hinaus erstrecken. Vorzugsweise sind die Schaufeln 32 jedoch von dem Rotorkern 22 axial beabstandet.

Der axiale Abstand zwischen den Schaufeln 32 einerseits und dem Rotorkern 22 bzw. den Permanentmagneten 21 bzw. der axial unteren Seite der zylindrischen Wandung 34 andererseits beträgt vorzugsweise mindestens 5 mm, insbesondere mindestens 7 mm oder 8 mm, und/oder höchstens 20 mm oder 15 mm, insbesondere höchstens 13 mm oder 12 mm, besonders bevorzugt (etwa) 10 mm.

Der axiale Abstand der Schaufeln 32 zu dem Rotorkern 22 / den Permanentmagneten 21 ist vorzugsweise beim Magnetisieren der Permanentmagnete 21 vorteilhaft.

Üblicherweise werden die Permanentmagnete 21 erst nach dem Einsetzen in den Rotorkern 22 magnetisiert, insbesondere erst nach einem Auswuchten des Rotors 20. Dies hat den Vorteil, dass beim Auswuchten entstehende Späne nicht magnetisch anhaften können, so dass sie einfacher abgesaugt bzw. entfernt werden können.

Das Auswuchten wird bevorzugt mit montiertem Lüfterrad 30 durchgeführt, um auch Unwuchten des Lüfterrads 30 ausgleichen zu können. Folglich findet auch die nach dem Auswuchten durchgeführte Magnetisierung der Permanentmagnete 21 bevorzugt mit montiertem Lüfterrad 30 statt.

Zum Magnetisieren wird der Rotor 20, insbesondere der Rotorkern 22 bzw. die zu magnetisierenden Permanentmagnete 21, in eine Magnetisierungsvorrichtung (nicht dargestellt) geschoben. Für eine gute Magnetisierung ist es vorteilhaft, wenn die Magnetisierungsvorrichtung einen möglichst geringen radialen Abstand von den zu magnetisierenden Permanentmagneten 21 hat bzw. sich an den Rotorkern 22 möglichst eng anschmiegt. Der Durchmesser der Magnetisierungsvorrichtung ist daher vorzugsweise nur geringfügig größer als der Durchmesser des Rotorkerns 22 bzw. kleiner als der des Lüfterrads 30 bzw. Tragkörpers 31. Insbesondere werden der Tragkörper 31 und die Schaufeln 32 nicht in die Magnetisierungsvorrichtung geschoben.

Für eine gute Magnetisierung ist es aber auch vorteilhaft, wenn der Rotorkern 22 bzw. die zu magnetisierenden Permanentmagnete 21 möglichst weit in die Magnetisierungsvorrichtung eingeschoben werden können. Aufgrund des geringeren Durchmessers ist aber nur ein Einschieben bis zu den Schaufeln 32 möglich. Der axiale Abstand zwischen Schaufeln 32 und Rotorkern 22 / Permanentmagneten 21 ist daher vorzugsweise so gewählt, dass ein möglichst weites Einschieben bzw. eine gute Magnetisierung erzielt wird.

Vorzugsweise weist die Magnetisierungsvorrichtung Eingriffelemente auf (nicht dargestellt), die zwischen die Schaufeln 32 eingreifen können bzw. darin eingreifen, wenn der Rotor 20 bzw. Rotorkern 22 in die Magnetisierungsvorrichtung eingeschoben ist. Hierdurch kann der Rotor 20 während der Magnetisierung formschlüssig bzw. drehfest in der Magnetisierungsvorrichtung gehalten sein/werden.

Besonders bevorzugt ist die Anzahl der Schaufeln 32 bzw. dazwischen gebildeten Luftkanäle ein ganzzahliges Vielfaches der Anzahl an Permanentmagneten 21, beim Darstellungsbeispiel vorzugsweise das Fünffache. Hierdurch wird ermöglicht, dass der Eingriff zwischen Magnetisierungsvorrichtung und Rotor 20 in verschiedenen (Dreh-)Positionen des Rotors 20 erfolgen kann.

Generell sind auch andere Lösungen möglich. Wird beispielsweise die Magnetisierung ohne montiertes Lüfterrad 30 durchgeführt oder das Lüfterrad 30 bei einem Reluktanzmotor verwendet, können der Tragkörper 31 und/oder die Schaufeln 32 näher am Rotorkern 22 angeordnet sein und/oder das Lüfterrad 30, insbesondere die Nabe 33 und/oder zylindrische Wandung 34, mit geringerer axialer Erstreckung ausgebildet sein.

Der Abstand von der Oberseite bzw. Axialseite 31A des Tragkörpers 31 zum Rotorkern 22 ist vorzugsweise größer als 10 mm, insbesondere größer als 12 mm, und/oder kleiner als 20 mm, insbesondere kleiner als 16 mm, besonders bevorzugt (etwa) 14,5 mm. Dieser Abstand entspricht vorzugsweise der axialen Erstreckung bzw. Höhe des Lüfterrads 30 ohne Fixierelemente 38 bzw. dem Abstand von der Oberseite/Axialseite 31A des Tragkörpers 31 bis zur axial unteren Seite der Nabe 33 und/oder der axial unteren Seite der zylindrischen Wandung 34.

Einschließlich der Fixierelemente 38 ist die axiale Erstreckung bzw. Höhe des Lüfterrads 30 vorzugsweise größer als 20 mm, insbesondere größer als 25 mm, und/oder kleiner als 40 mm, insbesondere kleiner als 35 mm, besonders bevorzugt etwa 30 mm.

Der Durchmesser des Lüfterrads 30, vorzugsweise einschließlich der überstehenden Schaufeln 32 bzw. Spitzen 32C, ist vorzugsweise größer als 90 mm oder 100 mm, insbesondere größer als 105 mm oder 110 mm, und/oder kleiner als 140 mm oder 130 mm, insbesondere kleiner als 120 mm oder 115 mm, besonders bevorzugt etwa 111,5 mm.

Der äußere Durchmesser des Tragkörpers 31 bzw. der Durchmesser des Außenrands 31C ist vorzugsweise um mehr als 4 mm, insbesondere um mehr als 6 mm, und/oder um weniger als 16 mm, insbesondere um weniger als 12 mm, besonders bevorzugt um etwa 8, 9 oder 10 mm, geringer als der Durchmesser des Lüfterrads 30, insbesondere aufgrund der überstehenden Schaufeln 32 bzw. Schaufelspitzen 32C.

Der innere Durchmesser des Tragkörpers 31 bzw. der Durchmesser des Innenrands 31D bzw. der (äußere) Durchmesser der zylindrischen Wandung 34 ist vorzugsweise größer als 60 mm, insbesondere größer als 70 mm, und/oder kleiner als 90 mm, insbesondere kleiner als 80 mm, besonders bevorzugt etwa 76 mm.

Wie bereits eingangs erwähnt, weist das Lüfterrad 30 vorzugsweise die Speichen 35, 36 auf.

Vorzugsweise erstrecken sich die Speichen 35, 36 zwischen dem Tragkörper 31, insbesondere dessen Innenrand 31D, und/oder der zylindrischen Wandung 34 einerseits und der Nabe 33 andererseits.

Vorzugsweise erstrecken sich die Speichen 35, 36 zumindest im Wesentlichen in radialer Richtung und/oder sind strahlenartig oder sternförmig um die Rotationsachse A bzw. um die Nabe 33 herum angeordnet, insbesondere gleichmäßig.

Beim Darstellungsbeispiel weist das Lüfterrad 30 vorzugsweise zwei verschiedene Typen von Speichen 35, 36 auf, nämlich äußere Speichen 35 und innere Speichen 36.

Vorzugsweise ist zwischen den äußeren Speichen 35 und den inneren Speichen 36 ein Verbindungsring 37 angeordnet, der insbesondere die äußeren Speichen 35 mit den inneren Speichen 36 verbindet.

Vorzugsweise ist der Verbindungsring 37 konzentrisch zur Rotationsachse A bzw. Nabe 33 bzw. zylindrischen Wandung 34 angeordnet. Insbesondere bildet die Rotationsachse A die Ringachse bzw. Symmetrieachse des Verbindungsrings 37.

Die axiale Erstreckung bzw. Höhe des Verbindungsrings 37 ist vorzugsweise zumindest im Wesentlichen gleich der axialen Erstreckung bzw. Höhe der zylindrischen Wandung 34.

Die äußeren Speichen 35 erstrecken sich vorzugsweise von dem Tragkörper 31 bzw. dessen Innenrand 31D und/oder der zylindrischen Wandung 34, insbesondere bis zum Verbindungsring 37.

Die inneren Speichen 36 erstrecken sich vorzugsweise von der Nabe 33, insbesondere bis zum Verbindungsring 37.

Vorzugsweise erstrecken sich die inneren Speichen 36 vom Verbindungsring 37 aus radial nach innen und/oder die äußeren Speichen 35 vom Verbindungsring 37 aus radial nach außen.

Es ist auch möglich, dass das Lüfterrad 30 nur einen Typ von Speichen aufweist, die sich vorzugsweise vom Tragkörper 31 bzw. der zylindrischen Wandung 34 bis zur Nabe 33 erstrecken.

Die äußeren Speichen 35 und inneren Speichen 36 sind vorzugsweise versetzt zueinander angeordnet und/oder entlang des Verbindungsrings 37 beabstandet zueinander angeordnet, insbesondere jeweils in gleichen Abständen.

Beim Darstellungsbeispiel weist das Lüfterrad 30 vorzugsweise zehn äußere Speichen 35 und/oder zehn innere Speichen 36 auf. Vorzugsweise ist die Anzahl der äußeren Speichen 35 gleich der Anzahl der inneren Speichen 36. Besonders bevorzugt ist die Anzahl der äußeren Speichen 35 gleich der Anzahl an Permanentmagneten 21.

Die inneren Speichen 36 sind vorzugsweise rippenartig bzw. stegartig ausgebildet.

Die axiale Erstreckung bzw. Höhe der inneren Speichen 36 ist vorzugsweise zumindest im Wesentlichen gleich der axialen Erstreckung bzw. Höhe der zylindrischen Wandung 34 und/oder des Verbindungsrings 37.

Das Lüfterrad 30 kann, insbesondere einstückig mit dem Lüfterrad 30 gebildete, Fixierelemente 38 aufweisen.

Die Fixierelemente 38 erstrecken sich vorzugsweise zumindest im Wesentlichen in axialer Richtung, insbesondere nach unten bzw. in den Rotorkern 22 hinein.

Vorzugsweise ist jeweils ein Fixierelement 38 zwischen zwei benachbarten inneren Speichen 36 angeordnet.

Die Anzahl der Fixierelemente 38 ist vorzugsweise gleich der Anzahl an inneren Speichen 36 bzw. äußeren Speichen 35 bzw. Permanentmagneten 21. Jedes Fixierelement 38 ist vorzugsweise genau einem Permanentmagneten 21 zugeordnet.

Die Fixierelemente 38 dienen dazu, die die Permanentmagnete 21 im Rotorkern 22 zu fixieren bzw. klemmen, wie in Fig. 3 dargestellt. Vorzugsweise sind die Permanentmagneten 21 zusätzlich mit dem Rotorkern 22 und/oder Lüfterrad 30 verklebt, so dass die Fixierelemente 38 insbesondere einer Vorfixierung und/oder Positionierung der Permanentmagnete 21 bei der Montage bzw. während des Aushärtens von Klebstoff dient.

Besonders bevorzugt sind die Fixierelemente 38 wie in der europäischen Patentanmeldung mit der Anmeldenummer EP 23 179 122.9 beschrieben ausgebildet, deren gesamter Inhalt hiermit in diese Anmeldung aufgenommen wird. Insbesondere sind die Fixierelemente 38 wie in der EP 23 179 122.9 auf Seiten 28 bis 33 beschrieben ausgebildet. Ferner werden die Permanentmagnete 21 vorzugsweise wie in der EP 23 179 122.9, insbesondere auf Seiten 35 bis 38, beschrieben mittels der Fixierelemente 38 im Rotorkern 22 montiert bzw. (vor-)fixiert.

Es ist aber auch möglich, auf die Fixierelemente 38 zu verzichten. Beispielsweise können die Permanentmagnete 21 durch andere, nicht vom Lüfterrad 30 gebildete Fixierelemente befestigt sein und/oder vorfixiert werden. Ferner kann auf die Fixierelemente 38 verzichtet werden, wenn es sich bei dem Elektromotor 1 um einen Reluktanzmotor handelt bzw. keine Permanentmagnete vorgesehen sind.

Vorzugsweise weisen die äußeren Speichen 35 die Form eines T-Trägers auf bzw. sind in einem Schnitt quer bzw. senkrecht zu ihrer Längs-/Radialerstreckung T-förmig. Insbesondere weisen die äußeren Speichen 35 jeweils einen ersten Abschnitt 35A auf, der sich im Wesentlichen in radialer und axialer Richtung erstreckt und einen zweiten Abschnitt 35B, der sich im Wesentlichen in radialer und Umfangs- bzw. Drehrichtung erstreckt.

In üblicher Gebrauchslage erstreckt sich der erste Abschnitt 35A vorzugsweise zumindest im Wesentlichen vertikal und der zweite Abschnitt 35B zumindest im Wesentlichen horizontal, weshalb die Abschnitte im Folgenden als vertikaler Abschnitt 35A und als horizontaler Abschnitt 35B bezeichnet werden.

Der horizontale Abschnitt 35B ist vorzugsweise an der axial unteren Seite bzw. dem Rotorkern 22 zugewandten Seite des Lüfterrads 30 angeordnet.

Der horizontale Abschnitt 35B erstreckt sich vorzugsweise zumindest im Wesentlichen orthogonal von der zylindrischen Wandung 34, insbesondere einem axialen bzw. unteren bzw. dem Tragkörper 31 gegenüberliegenden Ende der zylindrischen Wandung 34.

Die äußeren Speichen 35, insbesondere deren horizontale Abschnitte 35B, sind vorzugsweise unmittelbar über den Permanentmagneten 21 angeordnet.

Besonders bevorzugt bilden die äußeren Speichen 35, insbesondere deren horizontale Abschnitte 35B, Reservoirs/Aufnahmekammern 35C. Die Aufnahmekammern 35C dienen vorzugsweise der Aufnahme von überdosiertem Klebstoff bei der Verklebung der Permanentmagnete 21 mit dem Rotorkern 22 und/oder Lüfterrad 30.

Die Reservoirs/Aufnahmekammern 35C sind vorzugsweise wannenförmig, beckenförmig oder trogförmig bzw. als Wannen, Becken oder Tröge ausgebildet.

Die Aufnahmekammern 35C sind vorzugsweise durch entsprechende (axiale) Vertiefungen in den äußeren Speichen 35, insbesondere deren horizontalen Abschnitten 35B, insbesondere auf deren axial unteren Seiten, ausgebildet.

Vorzugsweise weist jede äußere Speiche 35 mehrere, beim Darstellungsbeispiel jeweils vier, Aufnahmekammern 35C auf. Die einzelnen Aufnahmekammern 35C sind vorzugsweise durch rippenartige Hervorstehungen 35D voneinander abgegrenzt, die sich quer bzw. orthogonal zur Längs-/Radialerstreckung der äußeren Speiche 35 und/oder auf der axial unteren Seite des horizontalen Abschnitts 35B erstrecken.

Die Hervorstehungen 35D einer äußeren Speiche 35 haben vorzugsweise unterschiedliche axiale Erstreckungen bzw. liegen in unterschiedlichen (Horizontal-)Ebenen. Dies ist insbesondere in Fig. 11 dargestellt.

Fig. 11 zeigt einen Schnitt durch eine äußere Speiche 35 und ist eine ausschnittsweise Vergrößerung des Schnitts gemäß Fig. 3. In dieser Darstellung sind die bevorzugten unterschiedlichen axialen Erstreckungen der Hervorstehungen 35D deutlich zu erkennen.

Durch die unterschiedlichen axialen Erstreckungen der Hervorstehungen 35D kann eine herstellungsbedingte Verbiegung des gesamten Lüfterrads 30 ausgeglichen werden. Insbesondere wird sichergestellt, dass das Lüfterrad 30 radial außen am Rotorkern 22 und/oder an den Permanentmagneten 21 anliegt. Hierdurch wird vorzugsweise ein Kippeln der Permanentmagnete 21 vermieden.

Bei der Montage der Permanentmagneten 21 überdosierter Klebstoff sammelt sich vorzugsweise in den Aufnahmekammern 35C bzw. wird dort eingetragen. Besonders bevorzugt verklebt der überdosierte Klebstoff in den Aufnahmekammern 35C den Permanentmagneten 21 zusätzlich mit dem Lüfterrad 30.

Besonders bevorzugt gelten bezüglich der Aufnahmekammern 35C und der Verklebung der Permanentmagneten 21 die Ausführungen der EP 23 179 122.9, insbesondere wie dort auf Seiten 27 bis 28 und Seiten 35 bis 38 beschrieben.

Auf die Aufnahmekammern 35C kann auch verzichtet werden, beispielsweise wenn die Permanentmagneten 21 nicht verklebt werden oder wenn der Elektromotor 1 ein Reluktanzmotor ist.

Die vertikalen Abschnitte 35A der äußeren Speichen 35 erstrecken sich vorzugsweise jeweils auf der Oberseite bzw. dem Rotorkern 22 bzw. den Permanentmagneten 21 abgewandten Seite des Lüfterrads 30, insbesondere des jeweiligen horizontalen Abschnitts 35B.

Besonders bevorzugt verringert sich die axiale Erstreckung bzw. Höhe der äußeren Speichen 35, insbesondere der jeweiligen vertikalen Abschnitte 35A, radial nach au-ßen, insbesondere kontinuierlich bzw. linear. Dies ist insbesondere in Fig. 10 dargestellt.

Vorzugsweise nimmt der Abstand der oberen axialen Kante des vertikalen Abschnitts 35A zum horizontalen Abschnitt 35B radial nach außen ab, zumindest abschnittsweise.

Die maximale axiale Erstreckung bzw. Höhe der äußeren Speiche 35 bzw. des vertikalen Abschnitts 35A entspricht vorzugsweise zumindest im Wesentlichen der axialen Erstreckung der inneren Speichen 36, des Verbindungsrings 37 und/oder der zylindrischen Wandung 34.

Vorzugsweise hat die äußere Speiche 35, insbesondere der vertikale Abschnitt 35A, die maximale axiale Erstreckung bzw. Höhe an ihrem radial innen liegenden Ende bzw. dem (unmittelbar) an den Verbindungsring 37 grenzenden Ende.

Im Übergangsbereich zur zylindrischen Wandung 34 und/oder zum Tragkörper 31 kann sich die axiale Erstreckung bzw. Höhe der äußeren Speiche 35 bzw. des vertikalen Abschnitts 35A radial nach außen vergrößern, insbesondere für einen abgerundeten Übergang, wie in Fig. 10 dargestellt. Die minimale axiale Erstreckung bzw. Höhe hat die äußere Speiche 35 bzw. der vertikale Abschnitt 35A vorzugsweise vor diesem Übergangsbereich.

Zwischen den Speichen, insbesondere den äußeren Speichen 35 bzw. deren horizontalen Abschnitten 35B, sind vorzugsweise Ausnehmungen 39 vorgesehen, die insbesondere axiale Öffnungen bilden. Insbesondere ist zwischen jeweils zwei benachbarten Speichen 35 eine Ausnehmung 39 gebildet.

Vorzugsweise sind die Ausnehmungen 39 zumindest im Wesentlichen dreieckig.

Die Ausnehmungen 39 dienen vorzugsweise einerseits einer Materialersparnis, andererseits ermöglichen die Ausnehmungen 39 einen Zugang zum Rotorkern 22 zum Auswuchten des Rotors 20. Hierdurch kann der Rotor 20 mit montiertem Lüfterrad 30 ausgewuchtet werden, sodass etwaige durch das Lüfterrad 30 hervorgerufene Unwuchten berücksichtigt werden können. Eine Unwucht liegt vor, wenn die Rotationsachse A des Rotor 20 nicht einer seiner Hauptträgheitsachsen entspricht.

Zum Auswuchten wird dem Rotor 20, insbesondere dem Rotorkern 22, Material entfernt und/oder hinzugefügt, vorzugsweise entfernt, besonders bevorzugt durch (axiales) Bohren in den Rotorkern 22.

Vorzugsweise können durch die Ausnehmungen 39 hindurch Wuchtbohrungen gesetzt werden bzw. kann ein Wuchtbohrer durch die Ausnehmungen 39 hindurch in den Rotorkern 22 bohren.

Die zylindrische Wandung 34 weist vorzugsweise auf ihrer innenliegenden Seite bzw. benachbart zu den Ausnehmungen 39 Einbuchtungen 34A auf, insbesondere je eine Einbuchtung 34A pro Ausnehmung 39.

Durch die Einbuchtungen 34A wird der Freiraum zum Einbringen eines Wuchtbohrers im Bereich der zylindrischer Wandung 34 und jeweiligen Ausnehmung 39 vergrößert. Hierdurch kann vorzugsweise ein möglichst großer Wuchtbohrer oder möglichst großer Wuchtbohrer mit verstärktem Schaft zum Auswuchten verwendet werden, insbesondere bei kompakt ausgebildetem Lüfterrad 30.

Vorzugsweise weist die zylindrische Wandung 34 radiale Öffnungen 34B auf, die sich insbesondere an die Ausnehmungen 39 anschließen. Insbesondere weist die zylindrische Wandung 34 je Ausnehmung 39 eine radiale Öffnung 34B auf.

Einerseits dienen die radialen Öffnungen 34B vorzugsweise einer Materialersparnis, andererseits können über die radialen Öffnungen 34B vorzugsweise während des Wuchtens entstehende Späne bzw. das vom Rotorkern 22 entfernte Material abgesaugt werden.

Besonders bevorzugt gelten bezüglich des Auswuchtens die Ausführungen der EP 23 179 122.9, insbesondere wie dort auf Seiten 5 bis 6 und Seiten 47 bis 49 beschrieben.

Das Lüfterrad 30 kann optional eine Wuchtmarkierung 31E aufweisen. Die Wuchtmarkierung 31E ist insbesondere zum Markieren einer Position bzw. Drehlage des Lüfterrads 30 ausgebildet. Insbesondere ist die Wuchtmarkierung 31E als Markierung für einen Wuchtprozess ausgebildet bzw. dazu ausgebildet, bei einem Auswuchten des Rotors 20 bzw. Elektromotors 1 eine vorzugsweise optische Detektion einer Position und/oder Bewegung, insbesondere einer Drehzahl, des Lüfterrads 30 bzw. Rotors 20 zu ermöglichen.

Im Darstellungsbeispiel ist die Wuchtmarkierung 31E durch eine Materialaussparung bzw. eine Durchbrechung des Lüfterrads 30 bzw. als (durchgängiges) Loch im Lüfterrad 30, insbesondere im Tragkörper 31, gebildet. Es sind jedoch auch andere Lösungen möglich. Beispielsweise kann die Wuchtmarkierung 31 durch eine Vertiefung oder Erhebung im Lüfterrad 30 gebildet sein.

Nachfolgend wird die bevorzugte Luftführung näher beschrieben.

Vorzugsweise bewirkt ein Drehen bzw. Rotieren des Lüfterrads 30, dass Luft axial angesaugt und radial umgelenkt bzw. ausgeblasen wird.

In Fig. 3 ist schematisch ein Strömungsweg bzw. Strömungspfad S des vom Lüfterrad 30 erzeugten Luftstroms eingezeichnet.

Der Elektromotor 1, insbesondere der Stator 10 bzw. die Spulen 11 und/oder der Rotor 20, werden vorzugsweise zumindest im Wesentlichen in axialer Richtung durchströmt bzw. umströmt. Insbesondere strömt die Luft hierbei durch zwischen dem Stator 10 und dem Rotor 20 und/oder zwischen den Spulen 11 gebildete Spalte.

Wenn die axial strömende Luft auf das Lüfterrad 30 trifft, wird sie vorzugsweise in die radiale Richtung umgelenkt und/oder strömt durch die zwischen den Schaufeln 32 gebildeten Kanäle.

Durch den Luftstrom wird der Elektromotor 1, insbesondere die umströmten Bauteile, gekühlt. Insbesondere wird entstehende Abwärme, beispielsweise durch Erhitzung der stromdurchflossenen Spulen 11 und/oder durch die Rotation des Rotors 20, mit dem Luftstrom wegtransportiert. Die Luft erwärmt sich hierbei. Vorzugsweise hat die einströmende Luft Umgebungstemperatur und die ausströmende Luft eine gegenüber der Umgebungstemperatur erhöhte Temperatur.

Vorzugsweise strömt die Luft axial, insbesondere von unten, in den Elektromotor 1 ein bzw. wird axial angesaugt. Hierzu weist die untere Lagerbrücke 60 und/oder ein sonstiges (unteres) Gehäuseteil des Elektromotors 1 vorzugsweise entsprechende axiale Lüftungsöffnungen 61 auf. Unten ist hierbei die dem Lüftungsrad 30 abgewandte Seite des Elektromotors 1 bzw. Rotors 20.

Unter einer axialen Öffnung ist vorzugsweise eine Öffnung zu verstehen, deren Öffnungsrichtung (zumindest im Wesentlichen) in die axiale Richtung bzw. parallel zur Rotationsachse A verläuft. Entsprechend ist unter einer radialen Öffnung vorzugsweise eine Öffnung zu verstehen, deren Öffnungsrichtung (zumindest im Wesentlichen) in die radiale Richtung verläuft.

Prinzipiell ist es auch möglich, dass die Luft zusätzlich oder alternativ radial in den Elektromotor 1 strömt. Die untere Lagerbrücke 60 und/oder ein entsprechendes unteres Bauteil weist dann vorzugsweise zusätzlich oder alternativ entsprechende radiale Öffnungen auf. Die radial einströmende Luft würde dann entsprechend umgelenkt, um den Elektromotor 1 axial zu durchströmen.

Vorzugsweise strömt die Luft radial, insbesondere an der oberen Seite bzw. der Seite des Elektromotors 1, an der das Lüfterrad 30 angeordnet ist, aus dem Elektromotor 1 heraus bzw. wird radial ausgeblasen. Hierzu weist die obere Lagerbrücke 50 und/oder ein sonstiges (oberes) Gehäuseteil des Elektromotors 1 vorzugsweise entsprechende radiale Lüftungsöffnungen 51 auf.

Besonders bevorzugt kann die Luft nur radial ausströmen bzw. weist die obere Lagerbrücke 50 und/oder das sonstige obere Gehäuseteil ausschließlich radiale Lüftungsöffnungen 51 auf. Der Elektromotor 1 ist vorzugsweise von oben bzw. an seiner oberen axialen Seite, insbesondere der axialen Seite der Lagerbrücke 50, geschlossen.

Die obere Lagerbrücke 50 und/oder das sonstige obere Gehäuseteil kann zusätzliche radiale Aussparungen 52, insbesondere für die Anschlusseinrichtungen 14, aufweisen, die als zusätzliche Lüftungsöffnungen fungieren können.

Vorzugsweise wird der in Fig. 3 gezeigte und zuvor beschriebene Strömungspfad S sowohl bei Drehung des Rotors 20 bzw. Lüfterrads 30 in die erste Drehrichtung D1 als auch bei Drehung des Rotors 20 bzw. Lüfterrads 30 in die zweite Drehrichtung D2 erzielt bzw. durchlaufen.

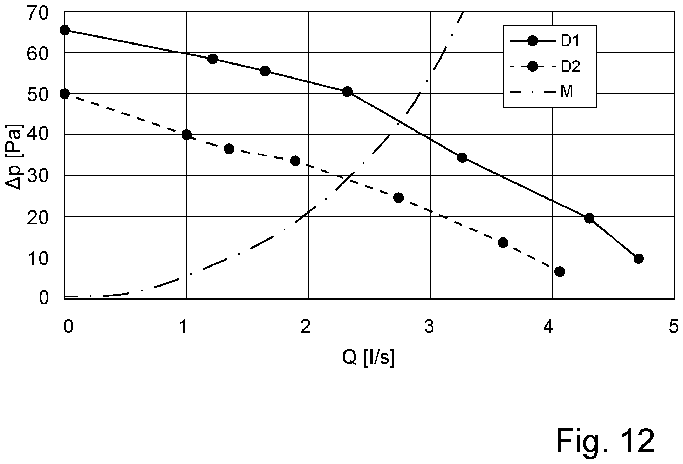

Der Volumenstrom, insbesondere entlang des Strömungspfads S, ist in der ersten Drehrichtung D1 vorzugsweise größer als in der zweiten Drehrichtung D2, insbesondere aufgrund der Krümmung der Schaufeln 32. Dies ist in Fig. 12 veranschaulicht.

Fig. 12 zeigt in einem schematischen Diagramm beispielhaft zwei (Lüfter-)Kennlinien des Elektromotor 1 bzw. Lüfterrads 30 sowie schematisch eine (Anlagen-)Kennlinie M für ein Gerät, beispielsweise eine Küchenmaschine 100, in der der Elektromotor 1 bzw. das Lüfterrad 30 verwendet werden soll.

Dargestellt ist in Fig. 12 die Abhängigkeit der Druckänderung Δp vom Volumenstrom Q. Eine solche Darstellung ist eine gängige, dem Fachmann bekannte Darstellung, um einen Lüfter näher zu charakterisieren. Die sich für den Lüfter ergebenden Kennlinien werden auch als Ventilatorkennlinien oder Lüfterkennlinien bezeichnet. Die sich für die Anlage bzw. das Gerät, worin der Lüfter eingebaut werden soll, ergebende Kennlinie wird auch als Anlagenkennlinie bezeichnet.

Der Volumenstrom Q gibt an, wie viel Volumen eines Fluids, insbesondere Luft, pro Zeiteinheit transportiert wird. Der Volumenstrom Q ist proportional zur Strömungsgeschwindigkeit des Mediums. Beim Darstellungsbeispiel ist der Volumenstrom Q in Litern pro Sekunde angegeben.

Die Druckänderung Δp gibt an, welchen Druck der Lüfter erzeugen muss, um gegen den Strömungswiderstand des Fluids zu arbeiten. Dies hängt insbesondere von der Einbausituation ab. Beim Darstellungsbeispiel ist die Druckänderung Δp in Pascal angegeben.

Der Schnittpunkt der Lüfterkennlinie mit der Abszisse (Q-Achse) stellt die Situation der freien Strömung dar, bei der der Lüfter gegen keinen Widerstand arbeiten muss. Hier lässt sich der maximale Volumenstrom des freien Lüfters ablesen. Dies ist nur ein theoretischer Wert, da es im eingebauten Zustand immer zu Strömungswiderständen kommt.

Der Schnittpunkt der Lüfterkennlinie mit der Ordinate (Δp-Achse) stellt die Situation der vollständig blockierten Strömung dar, bei der der Lüfter nicht mehr gegen den Strömungswiderstand ankommt, so dass kein Volumenstrom Q entsteht. Hier lässt sich der maximale Druck, den der Lüfter aufbauen kann, ablesen.

Fig. 12 zeigt beispielhaft zwei Lüfterkennlinien für den vorschlagsgemäßen Elektromotor 1 bzw. das vorschlagsgemäße Lüfterrad 30. Die beiden Lüfterkennlinien zeigen hierbei den Unterschied für die verschiedenen Drehrichtungen D1, D2, insbesondere bei (betragsmäßig) gleicher Drehzahl.

Die durchgezogene Lüfterkennlinie ergibt sich, wenn der Elektromotor 1 bzw. das Lüfterrad 30 in der ersten Drehrichtung D1 betrieben/gedreht wird. Die gestrichelte Lüfterkennlinie ergibt sich, wenn der Elektromotor 1 bzw. das Lüfterrad 30 in der zweiten Drehrichtung D2 betrieben/gedreht wird, wobei die Drehzahl für beide Lüfterkennlinien gleich ist, insbesondere 5000 U/min beträgt.

Die Lüfterkennlinien wurden vorzugsweise unter gleichen Randbedingungen bestimmt, beispielsweise bei gleicher Umgebungstemperatur und/oder gleichem Atmosphärendruck.

Die Lüfterkennlinien wurden bevorzugt auf genormten Prüfständen bestimmt, beispielsweise gemäß DIN EN ISO 5801:2018-04.

Wie zu erkennen ist, liegt die Lüfterkennlinie für die erste Drehrichtung D1 vollständig über der Lüfterkennlinie für die zweite Drehrichtung D2. Somit ergibt sich für eine bestimmte Druckänderung Δp ein größerer Volumenstrom Q bzw. eine höhere Strömungsgeschwindigkeit bzw. mehr geförderte Luft beim Betrieb in die erste Drehrichtung D1 als in die zweite Drehrichtung D2.

Wie weiter zu erkennen ist, ist der Elektromotor 1 in beide Drehrichtungen D1, D2 betreibbar. Insbesondere bricht der Volumenstrom Q in der zweiten Drehrichtung D2 nicht zusammen bzw. ergibt sich auch in der zweiten Drehrichtung D2 ein hoher oder zumindest ausreichender Volumenstrom Q.

Die dargestellten Lüfterkennlinien sind vorzugsweise bei einer Drehzahl im mittleren Bereich des mit dem vorschlagsgemäßen Elektromotors 1 möglichen Drehzahlbereichs bestimmt worden, insbesondere bei 5000 U/min. Auch bei höheren und/oder niedrigeren Drehzahlen ergibt sich vorzugsweise qualitativ die gleiche Darstellung, insbesondere mit Lüfterkennlinie für die erste Drehrichtung D1 oberhalb der Lüfterkennlinie für die zweite Drehrichtung D2.

Ohne die gebogenen Schaufeln 32 würde sich vorzugsweise für beide Drehrichtungen D1, D2 die gleiche Lüfterkennlinie ergeben. Bei sonst gleicher Ausbildung des Lüfterrads 30 läge diese Lüfterkennlinie zwischen den beiden in Fig. 12 dargestellten Lüfterkennlinien. Insbesondere wird also der Betrieb in der ersten Drehrichtung D1 verbessert, insbesondere während der Betrieb in der zweiten Drehrichtung D2 weiterhin ermöglicht wird.

Beispielsweise würden sich für den aus der EP 23 179 122.9 bekannten Elektromotor für beide Drehrichtungen die gleiche Lüfterkennlinie ergeben.

Bei anderen Elektromotoren, die nur in eine Richtung betreibbar sind, ergibt sich hingegen nur in eine Drehrichtung eine vergleichbare Lüfterkennlinie, während sich in die andere Drehrichtung keine bzw. nur eine Lüfterkennlinie mit sehr geringem maximalen Volumenstrom (Schnittpunkt mit der Q-Achse) ergeben würde.

Der tatsächliche Volumenstrom Q, der sich beim Betrieb in einer Anlage bzw. einem Gerät, insbesondere einer Küchenmaschine 100, ergibt, hängt maßgeblich von der Anlage bzw. dem Gerät ab.

Wenn ein Fluid, insbesondere Luft, durch eine Anlage bzw. ein Gerät strömt, kommt es zu Druckverlusten, beispielsweise durch Reibung an Wandungen, Strömungsumlenkungen, Querschnittsänderungen und dergleichen. Je schneller das Fluid strömt, desto höher sind die Druckverluste. Üblicherweise steigen die Druckverluste (annähernd) quadratisch mit der Strömungsgeschwindigkeit bzw. dem Volumenstrom Q. Die Kennlinie für die Anlage bzw. das Gerät - sogenannte Anlagenkennlinie - ist daher üblicherweise eine Parabel.

Beispielhaft ist Fig. 12 eine Anlagenkennlinie M, beispielsweise für eine Küchenmaschine 100, strichpunktiert eingezeichnet. Die Anlagenkennlinie M erfasst hierbei vorzugsweise sämtliche Druckverluste stromaufwärts und stromabwärts des Lüfters.

Der Arbeitspunkt bzw. Betriebspunkt des Lüfters, der in das Gerät eingebaut ist, ergibt sich durch den Schnittpunkt der Anlagenkennlinie und der Lüfterkennlinie. Am Betriebspunkt erzeugt der Lüfter eine Druckerhöhung, die den Druckverlust im Gerät kompensiert. Der tatsächliche Volumenstrom Q durch das Gerät ist daher durch den Betriebspunkt bestimmt.

Wie Fig. 12 zu entnehmen ist, ist der Volumenstrom Q am Betriebspunkt für die erste Drehrichtung D1 größer als für die zweite Drehrichtung D2.

Die eingezeichnete Anlagenkennlinie M ist nur beispielhaft. Da eine Anlagenkennlinie jedoch immer eine positive Steigung hat, ergibt sich auch für jede andere Anlagenkennlinie, dass der Volumenstrom Q am Betriebspunkt für die erste Drehrichtung D1 größer ist als für die zweite Drehrichtung D2.

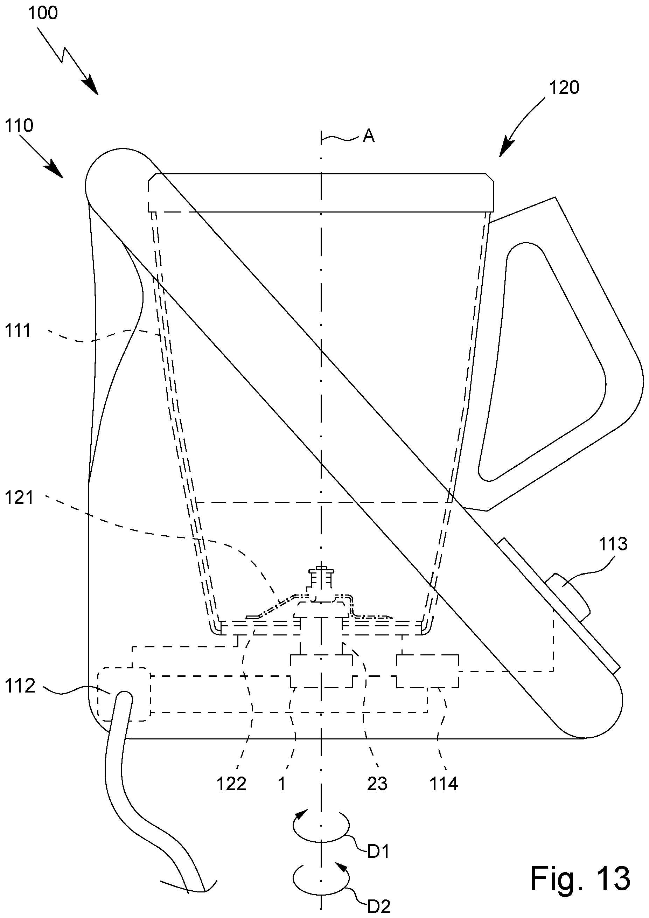

Fig. 13 zeigt schematisch eine vorschlagsgemäße Küchenmaschine 100 zur Zubereitung von Speisen bzw. Bearbeitung von Lebensmitteln. Bei der Küchenmaschine 100 handelt es sich vorzugsweise um eine elektrisch betriebene Multifunktions-Küchenmaschine, die zum Zerschneiden bzw. Zerkleinern, Rühren bzw. Mischen, Kneten und/oder Erhitzen bzw. Kochen von Lebensmitteln ausgebildet ist.

Die Küchenmaschine 100 weist vorzugsweise eine Basisstation 110 und/oder ein Gefäß 120 zur Aufnahme von Lebensmitteln auf.

Die Basisstation 110 und das Gefäß 120 sind vorzugsweise elektrisch und/oder mechanisch verbunden oder verbindbar, insbesondere um ein Erhitzen und/oder Zerschneiden/Mischen/Umrühren/Kneten des Lebensmittels in dem Gefäß 120 zu ermöglichen.

Fig. 13 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Werkzeug 121 ausgestattet, insbesondere um Lebensmittel im Gefäß 120 zu zerschneiden, zu zerkleinern, zu mischen, zu rühren und/oder zu kneten. Das Werkzeug 121 ist vorzugsweise am Boden des Gefäßes 120 angeordnet bzw. drehbar gelagert.

Das Gefäß 120 ist mechanisch mit der Basisstation 110 verbunden oder verbindbar, um das Werkzeug 121 mittels der Basisstation 110 anzutreiben.

Zum Antrieb des Werkzeugs 121 weist die Küchenmaschine 100, insbesondere die Basisstation 110, den Elektromotor 1 auf, der über die Welle 23 - optional über den Wellenaufsatz 80 - mit dem Werkzeug 121 verbunden oder verbindbar ist und/oder - in der Anschlussposition - von unten formschlüssig in den Boden des Gefäßes 120 eingreift.

Der Elektromotor 1 ist in der Küchenmaschine 100 vorzugsweise derart eingebaut, dass sich das Lüfterrad 30 bei der in Fig. 13 gezeigten üblichen Gebrauchslage der Küchenmaschine 100 oben an dem Elektromotor 1 bzw. der dem Gefäß 120 zugewandten Seite des Elektromotors 1 bzw. oberhalb des Stators 10 und/oder Rotorkerns 22 befindet und/oder die Rotationsachse A zumindest im Wesentlichen vertikal verläuft.

Bevorzugt ist der Elektromotor 1 also so eingebaut, dass beim üblichen Betrieb der Küchenmaschine 100 Luft in axialer Richtung bzw. von unten in den Elektromotor 1 hineinströmt, insbesondere durch die Lüftungsöffnungen 61 der unteren Lagerbrücke 60, und in radialer Richtung bzw. seitlich aus dem Elektromotor 1 herausströmt, insbesondere durch die Lüftungsöffnungen 51 der oberen Lagerbrücke 50. Die Küchenmaschine 100, insbesondere die Basisstation 110 weist vorzugsweise entsprechende Luftpfade bzw. Öffnungen auf (nicht dargestellt), um dem Elektromotor 1 Umgebungsluft (axial) zuzuführen und die (radial) aus dem Elektromotor 1 ausströmende Luft in die Umgebung abzuführen.

Vorzugsweise entspricht die Rotationsachse A des Elektromotors 1 der Drehachse des Werkzeugs 121 und/oder einer Mittelachse des Gefäßes 120, die mittig durch das Gefäß 120 verläuft, wie in Fig. 13 angedeutet.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Vorzugsweise wird das Werkzeug 121 direkt bzw. getriebelos von dem Elektromotor 1 angetrieben. Prinzipiell wäre aber auch eine Übertragung der Drehbewegung des Elektromotors 1 auf das Werkzeug 121 mittels eines Getriebes möglich.

Zum Erhitzen bzw. Kochen von Lebensmitteln ist das Gefäß 120 vorzugsweise (elektrisch) beheizbar bzw. weist die Küchenmaschine 100 ein (elektrisches) Heizsystem 122 auf. Besonders bevorzugt ist das Heizsystem 121 als Dickschichtheizung ausgebildet.

Bei der dargestellten Ausführungsform ist das Heizsystem 122 in das Gefäß 120, integriert bzw. bildet das Heizsystem 122 einen Boden des Gefäßes 120 oder einen Teil davon. Es sind jedoch auch konstruktive Lösungen möglich, bei denen die Basisstation 110 das Heizsystem 122 aufweist oder bildet.

Die Küchenmaschine 100, insbesondere die Basisstation 110, weist vorzugsweise eine Stromversorgung 112 auf, um den Elektromotor 1, insbesondere dessen Spulen 11, und/oder andere Einrichtungen der Küchenmaschine 100, wie das Heizsystem 122, mit elektrischem Strom zu versorgen.

Die Küchenmaschine 100, insbesondere die Basisstation 110, weist vorzugsweise eine Benutzerschnittstelle 113, insbesondere gebildet durch eine Ausgabeeinrichtung wie einen Bildschirm und eine Eingabeeinrichtung wie einen Drehknopf, und/oder eine Computereinrichtung 114 auf.

Die Computereinrichtung 114 ist vorzugsweise zur Steuerung des Heizsystems 122 und/oder des Elektromotors 1 mit diesen elektrisch verbunden, wie in Fig. 13 durch Strichlinien angedeutet.

Über die Benutzerschnittstelle 113 kann ein Nutzer mit der Küchenmaschine 100 interagieren, insbesondere ein Rezept auswählen oder vorgeben und/oder Informationen bezüglich eines Rezepts bzw. bezüglich Zubereitungsschritten des Rezepts abrufen.

Die Computereinrichtung 114 ist vorzugsweise zur Speicherung und/oder Verarbeitung (digitaler) Rezepte ausgebildet. Insbesondere ist die Computereinrichtung 114 dazu ausgebildet, den Elektromotor 1 bzw. das Werkzeug 121 und/oder das Heizsystem 122 insbesondere entsprechend den Vorgaben eines Rezepts zu steuern, insbesondere zu aktivieren bzw. zu deaktivieren und/oder die Leistung des Heizsystems 122 und/oder die Drehzahl, Drehdauer und/oder Drehrichtung des Elektromotors 1 anzupassen, vorzugsweise zumindest teilweise automatisch.

Die Computereinrichtung 114 kann auch dazu ausgebildet sein, mit externen Geräten wie einem Mobiltelefon oder einem Server zu kommunizieren, beispielsweise um Rezepte davon abzurufen.

Abhängig von der Drehgeschwindigkeit bzw. Drehzahl und/oder der Drehrichtung des Werkzeugs 121 bzw. Elektromotors 1 ist die Küchenmaschine 100 vorzugsweise sowohl zum Rühren (insbesondere bei kleinen Drehzahlen) als auch zum Zerkleinern (insbesondere bei mittleren bis großen Drehzahlen) von Zutaten ausgebildet. Besonders bevorzugt ist auch ein langsames Rühren, beispielsweise mit 1 U/min oder 10 U/min, und/oder ein sehr feines bzw. definiertes Zerkleinern, beispielsweise mit 10.000 U/min, 12.000 U/min oder 15.000 U/min, möglich.

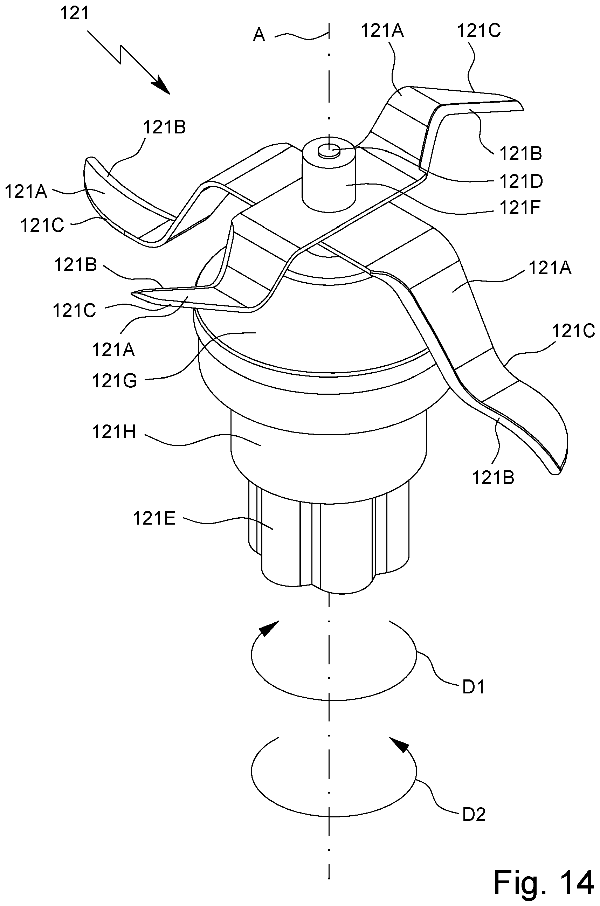

FIG 14 zeigt das Werkzeug 121 in einer schematischen, perspektivischen Darstellung.

Vorzugsweise ist das Werkzeug 121 ein Schneid- und Rührwerkzeug.

Besonders bevorzugt ist das Werkzeug 121 wie in der DE 2012 107 520 A1 beschrieben ausgebildet, deren gesamter Inhalt hiermit in diese Anmeldung aufgenommen wird.

Das Werkzeug 121 weist vorzugsweise ein oder mehrere, insbesondere austauschbare, Messer bzw. Blätter bzw. Arme 121A auf.

Der Arm bzw. die Arme 121A erstrecken sich vorzugsweise zumindest im Wesentlichen in radialer Richtung von einer Symmetrieachse bzw. Rotationsachse des Werkzeugs 121 bzw. ist/sind um die Symmetrie- bzw. Rotationsachse des Werkzeugs 121 drehbar gelagert.

Die Symmetrie- bzw. Rotationsachse des Werkzeugs 121 entspricht im montierten Zustand vorzugsweise der Rotationsachse A des Elektromotors 1 bzw. der Mittelachse des Gefäßes 120. Im Folgenden wird die Symmetrie- bzw. Rotationsachse des Werkzeugs 121 daher ebenfalls als Rotationsachse A bezeichnet.

Im Falle mehrerer Arme 121A sind diese vorzugsweise gleichmäßig um die Rotationsachse A herum angeordnet.

Beim Darstellungsbeispiel weist das Werkzeug 121 vorzugsweise vier Arme 121A auf, wobei benachbarte Arme 121A vorzugsweise (etwa) einen rechten Winkel einschließen.

Beim Darstellungsbeispiel sind vorzugsweise jeweils zwei gegenüberliegende Arme 121A einstückig miteinander ausgebildet.

Vorzugsweise weist der/jeder Arm 121A eine Schneide bzw. Schneidkante 121B auf, um Lebensmittel zu zerschneiden bzw. zu zerkleinern.

Die/jede Schneide 121B ist vorzugsweise in die erste Drehrichtung D1 gerichtet bzw. orientiert und/oder an der in erster Drehrichtung D1 gerichteten Seite des (jeweiligen) Arms 121A angeordnet bzw. gebildet.

Vorzugsweise weist der/jeder Arm 121A nur einseitig eine Schneide 121B auf.

Die in Drehrichtung D2 gewandte Seite bzw. der (jeweiligen) Schneide 121B gegenüberliegende Seite des/jedes Arms 121A formt vorzugsweise einen Rücken 121C aus.

Der (jeweilige) Rücken 121C ist gegenüber der Schneide 121B vorzugsweise stumpf ausgebildet. Insbesondere ist der Rücken 121C (wesentlich) dicker als die Schneide 121B ausgebildet, bevorzugt um mindestens das 10-fache, 20-fache oder 30-fache.

Das Werkzeug 121 weist vorzugsweise nur in die erste Drehrichtung D1 orientierte bzw. gerichtete Schneiden 121B auf.

Die Schneide(n) 121B des Werkzeugs 121 wirkt/wirken vorzugsweise nur bei Rotation/Drehung des Werkzeugs 121 bzw. des/der Arm(e) 121A in die erste Drehrichtung D1. Insbesondere kommt/kommen die Schneide(n) 121B nur bei Drehung in der ersten Drehrichtung D1 mit Lebensmitteln in Kontakt, um diese zu zerschneiden.

Bei Drehung in die zweite Drehrichtung D2 wirkt/wirken vorzugsweise nur der/die Rücken 121C bzw. kommt/kommen nur der/die Rücken 121C mit den Lebensmitteln in Kontakt. Vorzugsweise werden die Lebensmittel bei Kontakt mit dem/den Rücken 121C nur vermischt bzw. verrührt, insbesondere nicht zerschnitten.

Vorzugsweise bewirkt die Drehung des Werkzeugs in die erste Drehrichtung D1 (auch) ein Vermischen bzw. Verrühren der Lebensmittel.

Die Schneiden 121B können unterschiedlich geformt sein, insbesondere konkav oder konvex. Bei mehreren Schneiden 121B sind diese vorzugsweise zumindest teilweise unterschiedlich geformt, insbesondere teilweise konkav und teilweise konvex. Für die Rücken 121C gilt vorzugsweise entsprechendes.

Die Arme 121A können gebogen ausgebildet sein, insbesondere so dass die Schneiden 121B und/oder Rücken 121C in unterschiedlichen (axialen) Höhen (bezogen auf die Rotationsachse A) angeordnet sind, wie in Fig. 14 beispielhaft gezeigt.

Der/die Arm(e) 121A ist/sind vorzugsweise mit einer Werkzeugwelle 121D drehfest verbunden. Der/die Arm(e) 121A können aber auch schwenkbar mit der Werkzeugwelle 121D verbunden sein, insbesondere wie in Abs. [0072] bis [0078] der DE 2012 107 520 A1 beschrieben.

Die Werkzeugwelle 121D erstreckt sich vorzugsweise entlang der Rotationsachse A.

Das Werkzeug 121 weist vorzugsweise einen Kopplungsabschnitt 121E auf, der insbesondere drehfest mit der Werkzeugwelle 121D verbunden ist.

Der Kopplungsabschnitt 121E ist vorzugsweise mit dem Elektromotor 1 bzw. dem Rotor 20 bzw. der Welle 23, insbesondere dem Aufsatz 80, gekoppelt bzw. koppelbar.

Vorzugsweise weist der Kopplungsabschnitt 121E eine zum Aufsatz 80 korrespondiere Form auf, so dass zwischen dem Kopplungsabschnitt 121E und dem Aufsatz 80 ein in beide Drehrichtungen D1, D2 formschlüssige Kopplung entsteht bzw. sodass die Welle 23 des Elektromotors 1 und die Werkzeugwelle 121D über den Kopplungsabschnitt 121E und den Aufsatz 80 drehfest miteinander gekoppelt bzw. koppelbar sind.

Eine Rotation des Rotors 20 bzw. dessen Welle 23 bewirkt vorzugsweise eine Rotation der Werkzeugwelle 23D bzw. des Arms / der Arme 121A.

Der/die Arm(e) 121A ist/sind vorzugsweise mittels eines drehfest mit der Werkzeugwelle 121D verbundenen Kopfteils 121F am Werkzeug 121 gesichert.

Vorzugsweise weist das Werkzeug 121 einen oder mehrere Festlegungsabschnitte 121G, 121H auf, um das Werkzeug 121 am Gefäß 120, insbesondere dessen Boden, festzulegen.

Beim Darstellungsbeispiel weist das Werkzeug 121 einen oberen Festlegungsabschnitt 121G und einen unteren Festlegungsabschnitt 121H auf. Der obere Festlegungsabschnitt 121G ist vorzugsweise im Gefäß 120 bzw. oberhalb dessen Bodens angeordnet/anordenbar. Der untere Festlegungsabschnitt 121H ist vorzugsweise außerhalb des Gefäßes 120 bzw. unterhalb dessen Bodens angeordnet/anordenbar.

Der obere und untere Festlegungsabschnitt 121G, 121H sind vorzugsweise separate Bauteile. Vorzugsweise sind der obere und untere Festlegungsabschnitt 121G, 121H miteinander (reversibel) verbunden/verbindbar, beispielsweise ineinander geschraubt/schraubbar.

In einem bevorzugten Verfahren zum Zubereiten von Lebensmitteln wird die vorschlagsgemäße Küchenmaschine 100 mit dem vorschlagsgemäßen Elektromotor 1 sowohl in erster Drehrichtung D1 als auch in zweiter Drehrichtung D2 betrieben bzw. das Werkzeug 121 mittels des Elektromotors 1 sowohl in die erste Drehrichtung D1 als auch die zweite Drehrichtung D2 gedreht.

Das Verfahren wird vorzugsweise gemäß einem Rezept durchgeführt, wobei das Rezept bevorzugt mehrere Zubereitungsschritte umfasst, die nacheinander ausgeführt werden. Jeder Zubereitungsschritt entspricht vorzugsweise einem Verfahrensschritt in dem Zubereitungsverfahren.

Wie bereits eingangs erwähnt, umfasst oder besteht ein Zubereitungsschritt vorzugsweise aus einer Angabe bezüglich zu verwendender Lebensmittel bzw. Zutaten, insbesondere bezüglich der Art und Menge, sowie Angaben zu einer damit durchzuführenden Handlung.

Ein Zubereitungsschritt bzw. die im Zubereitungsschritt durchzuführende Handlung umfasst vorzugsweise einen Betrieb des Werkzeugs 121, insbesondere bei einer bestimmten Drehzahl, Drehdauer und/oder Drehrichtung, und/oder einen Betrieb des Heizsystems 122, insbesondere bei einer bestimmten Heiztemperatur und/oder Heizdauer.

Vorzugsweise umfasst ein Zubereitungsschritt einen Betrieb des Werkzeugs 121 in der ersten Drehrichtung D1, insbesondere bei mittleren oder hohen Drehzahlen, wenn Lebensmittel zerschnitten bzw. zerkleinert werden sollen.

Vorzugsweise umfasst ein Zubereitungsschritt einen Betrieb des Werkzeugs 121 in der ersten Drehrichtung D1, insbesondere bei niedrigen Drehzahlen, wenn Lebensmittel vermischt oder gerührt werden sollen und es dabei nicht darauf ankommt, ob die Schneiden 121A des Werkzeugs 121 wirken, beispielsweise weil das Lebensmittel flüssig oder viskos ist oder weil das Lebensmittel bereits in einem vorhergehenden Zubereitungsschritt zerkleinert wurde.

Vorzugsweise umfasst ein Zubereitungsschritt nur dann einen Betrieb des Werkzeugs 121 in der zweiten Drehrichtung D2, insbesondere bei niedrigen Drehzahlen, wenn Lebensmittel vermischt oder gerührt werden sollen und die Schneiden 121A des Werkzeugs 121 nicht wirken sollen, insbesondere wenn die gerührten Lebensmittel nicht zerschnitten/zerkleinert werden sollen.

Alternativ kann ein Zubereitungsschritt auch einen abwechselnden Betrieb in erster und zweiter Drehrichtung D1, D2 umfassen, insbesondere wenn das Lebensmittel geknetet werden soll.

Vorzugsweise wird beim Kneten abwechselnd das Werkzeug 121 in der ersten Drehrichtung D1 und der zweiten Drehrichtung D2 betrieben/gedreht. Insbesondere besteht ein Knetintervall aus einem Betrieb in erster Drehrichtung D1 für eine bestimmte Zeit oder eine bestimmte Anzahl an Umdrehungen und einem anschließenden einem Betrieb in zweiter Drehrichtung D2 für eine bestimmte Zeit oder eine bestimmte Anzahl an Umdrehungen, oder umgekehrt. Das Knetintervall wird dann für eine bestimmte Zeit oder Anzahl an Intervallen wiederholt.

Bevorzugt wird das Werkzeug 121 beim Kneten bzw. in einem Knetintervall länger bzw. mit mehr Umdrehungen in der ersten Drehrichtung D1 als in der Drehrichtung D2 gedreht, insbesondere um die doppelte, dreifache, vierfache oder fünffache Zeit bzw. Umdrehungsanzahl.

Vorzugsweise wird der Elektromotor 1 bzw. das Werkzeug 121 beim Kneten nur bei niedrigen Drehzahlen, insbesondere bei weniger als 1000 U/min, bevorzugt bei maximal 500 U/min betrieben, insbesondere sowohl in der ersten als auch der zweiten Drehrichtung D1, D2. Die Drehzahlen für die erste und die zweite Drehrichtung D1, D2 sind vorzugsweise (in etwa) gleich oder unterscheiden sich nur geringfügig.

Besonders bevorzugt werden die Drehzahlen beim Kneten automatisch von der Küchenmaschine 100 angepasst bzw. ist diese dazu ausgebildet, insbesondere in Abhängigkeit vom Widerstand, den das Lebensmittel dem Werkzeug 121 entgegensetzt.

Wie bereits eingangs erwähnt, sind vorzugsweise Drehzahlen von 10 U/min bis 10.000 U/min, ganz besonders bevorzugt von 1 U/min bis 12.000 U/min oder bis 15.000 U/min, mit dem vorschlagsgemäßen Elektromotor 1, zumindest in der ersten Drehrichtung D1, realisierbar. Unter "niedrigen Drehzahlen" sind vorzugsweise einbis dreistellige Drehzahlen zu verstehen, insbesondere Drehzahlen unter 1000 U/ min. "Hohe Drehzahlen" sind vorzugsweise fünfstellige Drehzahlen, insbesondere Drehzahlen über 10.000 U/min. Besonders bevorzugt liegt eine "hohe Drehzahl" bereits ab etwa 7000 U/min vor. "Mittlere Drehzahlen" sind die Drehzahlen zwischen den niedrigen und den hohen Drehzahlen, insbesondere zwischen 1000 U/min und 7000 U/min.

Das Rezept liegt vorzugsweise in digitaler Form bzw. einer von der Küchenmaschine 100 interpretierbarer Form vor. Insbesondere ist das Rezept in der Computereinrichtung 114 der Küchenmaschine 100 gespeichert und/oder von einem externen Speicher abrufbar. Bevorzugt umfasst die Küchenmaschine 100 und/oder der externe Speicher eine Rezept-Datenbank mit einer Vielzahl von Rezepten. Ein Benutzer kann vorzugsweise über die Benutzerschnittstelle 113 ein Rezept aus der Rezept-Datenbank auswählen bzw. abrufen bzw. anzeigen lassen.

Die Zubereitungsschritte werden vorzugsweise zumindest teilautomatisch von der Küchenmaschine 100 durchgeführt. Insbesondere muss ein Benutzer die Betriebsparameter des Heizsystems 122 bzw. des Elektromotors 1, insbesondere Drehzahl, Drehdauer und/oder Drehrichtung, nicht selbst einstellen, sondern diese werden automatisch von der Küchenmaschine 100 bzw. der Computereinrichtung 114 gemäß den Rezeptvorgaben eingestellt. Nicht automatisch durchführbare Handlungen, wie das Befördern eines bestimmten Lebensmittels in das Gefäß 120, werden dem Benutzer vorzugsweise über die Benutzerschnittstelle 113 angezeigt.

Es ist aber auch möglich, dass der Benutzer das Rezept manuell ausführt, insbesondere der Küchenmaschine 100 die Drehzahl, Drehdauer und/oder Drehrichtung des Elektromotors 1 bzw. Werkzeugs 121 vorgibt.

Bei dem vorschlagsgemäßen Verfahren wird der Elektromotor 1 in der ersten Drehrichtung D1 stärker belastet bzw. bei einer höheren Leistung betrieben als in der zweiten Drehrichtung D2. Dies liegt insbesondere daran, dass die durchschnittliche und/oder maximale Drehzahl in der ersten Drehrichtung D1 höher ist als in der zweiten Drehrichtung D2, und/oder dass der Elektromotor 1 länger in der ersten Drehrichtung D1 als der zweiten Drehrichtung D2 betrieben wird.

Vorzugsweise wird der Elektromotor 1 in der zweiten Drehrichtung D2 ausschließlich bei niedrigen Drehzahlen betrieben, insbesondere bei weniger als 1000 U/min.

In der ersten Drehrichtung D1 wird der Elektromotor 1 vorzugsweise auch bei mittleren bis hohen Drehzahlen betrieben, insbesondere bei mehr als 1000 U/min, bevorzugt bei bis zu 10.000, 12.000 oder 15.000 U/min.

Wird der Elektromotor 1 bei einem Rezept sowohl in der ersten als auch der zweiten Drehrichtung D1, D2 nur bei niedrigen Drehzahlen, insbesondere bei weniger als 1000 U/min, betrieben, ist der Betrieb in erster Drehrichtung D1 vorzugsweise länger als der Betrieb in der zweiten Drehrichtung D2.

Es ist auch möglich, dass die Gesamt-Drehdauer und die durchschnittliche Drehzahl nicht zwingend für ein einzelnes Rezept in der ersten Drehrichtung D1 größer ist als in der zweiten Drehrichtung D2, sondern dass dies nur gemittelt über die Vielzahl von Rezepten in der Rezept-Datenbank gilt. Es kann also einzelne Rezepte geben, bei denen der Elektromotor in der zweiten Drehrichtung D2 länger und bei höherer Durchschnitts- oder Maximal-Drehzahl betrieben wird, diese Rezepte bilden jedoch Ausnahmen in der Rezept-Datenbank. Vorzugsweise ist in diesem Fall die Maximal-Drehzahl kleiner als 1000 U/min.

Nachfolgend werden drei Beispielrezepte angegeben, bei denen das vorschlagsgemäße Verfahren angewendet wird.

Rezept für Risotto:
1. Eine Schalotte in das Gefäß 120 geben und für 5 Sekunden bei 2000 U/min in erster Drehrichtung D1 zerkleinern.
2. 20 g Butter und 10 g Öl zugeben und für 3 Minuten bei 120 °C und 100 U/min in erster Drehrichtung D1 dünsten.
3. 320 g Reis zugeben und für 3 Minuten bei 120 °C und 100 U/min in zweiter Drehrichtung D2 dünsten.
4. 60 g Wein, 820 g Wasser, 1 TL Gewürzpaste und 1 TL Salz zugeben und 12-13 Minuten bei 100 °C und 100 U/min in zweiter Drehrichtung D2 garen.
5. Risotto umfüllen, dann 40 g Parmesan in Stücken in das Gefäß 120 geben und für 10 Sekunden bei 10.200 U/min in erster Drehrichtung D1 zerkleinern. Den zerkleinerten Parmesan und 20 g Butter unter das Risotto heben und servieren.

Rezept für Hühner-Nudel-Suppe:
1. Eine Zwiebel halbiert, 200 g Möhren in Stücken und 100 g Porree in Ringen in das Gefäß 120 geben und für 4 Sekunden bei 2000 U/min in erster Drehrichtung D1 zerkleinern.
2. 20 g Öl zugeben und für 3 Minuten bei 120 °C und 100 U/min in erster Drehrichtung D1 dünsten.
3. 1 l Wasser, 400 g Hähnchenbrustfilet in Würfeln, einen Brühwürfel, 1 TL Salz, ½ TL Pfeffer zugeben und 12 Minuten bei 100 U/min in zweiter Drehrichtung D2 garen.
4. 50 g Nudeln zugeben und 8 Minuten bei 100 °C und 40 U/min in zweiter Drehrichtung D2 garen, dann servieren.

Rezept für Brotteig:
1. 450 g Wasser und 20 g Hefe in das Gefäß 120 geben und für 2 Minuten bei 37 °C und 200 U/min in erster Drehrichtung D1 erwärmen.
2. 800 g Weizenmehl und 15 g Salz zugeben und für 5 Minuten im Knetmodus kneten. Im Knetmodus wird der Elektromotor 1 bzw. das Werkzeug 121 intervallmäßig viermal in erster Drehrichtung D1 und einmal in zweiter Drehrichtung D2 betrieben/gedreht. Die Drehzahl variiert je nach Widerstand, den der Teig dem Werkzeug 121 entgegensetzt und beträgt maximal 500 U/min.
3. Den Brotteig aus dem Gefäß 120 nehmen und für 45 Minuten ruhen lassen. Anschließend kann der Brotteig zu Brot weiterverarbeitet werden.

Bei den beiden ersten Rezepten sollen im ersten Schritt Lebensmittel (bei mittlerer Drehzahl) zerkleinert werden, weshalb der Elektromotor 1 bzw. das Werkzeug 121 in erster Drehrichtung D1 betrieben wird. Beim jeweils zweiten Schritt sollen im Wesentlichen Lebensmittel bei niedriger Drehzahl vermischt werden. Da die verwendeten Lebensmittel flüssig sind (Öl) oder es unerheblich ist, ob diese beim Mischen/Rühren auch zerschnitten werden (Butter), wird der Elektromotor 1 bzw. das Werkzeug 121 auch beim zweiten Schritt in erster Drehrichtung D1 verwendet. Erst beim dritten Schritt werden Lebensmittel hinzugefügt, die nicht zerkleinert werden sollen (Reis, Hähnchenbrustwürfel). Folglich wird ab dem dritten Schritt der Elektromotor 1 bzw. das Werkzeug 121 nur noch in zweiter Drehrichtung D2 betrieben, wobei zum Verrühren/Vermischen aber eine geringe Drehzahl ausreichend oder vorteilhaft ist. Beim ersten Rezept soll zusätzlich noch ein weiteres Lebensmittel (Parmesan) bei hoher Drehzahl zerkleinert werden, weshalb wiederum die erste Drehrichtung D1 gewählt wird, nachdem das nicht zu zerkleinernde Lebensmittel aus dem Gefäß 120 entfernt wurde. Sowohl beim ersten als auch beim zweiten Rezept sind die durchschnittliche und die maximale Drehzahl in erster Drehrichtung D1 höher als in zweiter Drehrichtung D2. Der Elektromotor 1 wird somit in erster Drehrichtung D1 stärker belastet, auch wenn die Gesamt-Drehdauer in der zweiten Drehrichtung D2 größer ist als in der ersten Drehrichtung D1.

Beim dritten Rezept ist die durchschnittliche Drehzahl für beide Drehrichtungen D1, D2 in etwa gleich, die durchschnittliche oder maximale Drehzahl kann sogar für die zweite Drehrichtung D2 geringfügig höher sein (aufgrund der fehlenden Schneiden kann der Teigwiderstand in der zweiten Drehrichtung D2 größer als in der ersten Drehrichtung D1 sein). Die Drehzahlen liegen jedoch ausschließlich im niedrigen Drehzahlbereich. Allerdings ist die Gesamt-Drehdauer für die erste Drehrichtung D1 deutlich höher als in die zweite Drehrichtung D2, nämlich mehr als das Vierfache. Daher wird der Elektromotor 1 in die erste Drehrichtung D1 stärker belastet als in die zweite Drehrichtung D2.

Einzelne Aspekte, Merkmale und/oder Verfahrensschritte der vorliegenden Erfindung können unabhängig, aber auch in beliebiger Kombination und/oder Reihenfolge realisiert werden.

### Bezugszeichenliste:

- 1: Elektromotor

- 10: Stator
- 11: Spule
- 12: Statorkern
- 12A: Statorblech
- 12B: Statorzahn
- 13: Spulenträger
- 14: Anschlusseinrichtung

- 20: Rotor
- 21: Permanentmagnet
- 22: Rotorkern
- 22A: Rotorblech
- 23: Welle

- 30: Lüfterrad
- 31: Tragkörper
- 31A: erste Axialseite / Oberseite
- 31B: zweite Axialseite / Unterseite
- 31C: Außenrand
- 31D: Innenrand
- 31E: Wuchtmarkierung
- 32: Schaufel
- 32A: äußeres Ende / radialer Abschnitt
- 32B: inneres Ende / gebogener Abschnitt
- 32C: Spitze
- 32D: axiale Kante
- 32E: äußere/schräge Kante
- 33: Nabe
- 34: zylindrische Wandung
- 34A: Einbuchtung
- 34B: radiale Öffnung
- 35: äußere Speiche
- 35A: vertikaler Abschnitt
- 35B: horizontaler Abschnitt
- 35C: Aufnahmekammer
- 35D: Hervorstehung
- 36: innere Speiche
- 37: Verbindungsring
- 38: Fixierelement
- 39: Ausnehmung

- 40: (oberes) Lager
- 41: (unteres) Lager

- 50: (obere) Lagerbrücke
- 51: Lüftungsöffnung
- 52: Aussparung
- 53: Randabschnitt
- 53A: oberer Abschnitt
- 53B: unterer Abschnitt

- 60: (untere) Lagerbrücke
- 61: Lüftungsöffnung

- 70: Befestigungseinrichtung

- 80: Aufsatz

- 100: Küchenmaschine
- 110: Basisstation
- 111: Aufnahme
- 112: Stromversorgung
- 113: Benutzerschnittstelle
- 114: Computereinrichtung
- 120: Gefäß
- 121: Werkzeug
- 121A: Blatt/Arm
- 121B: Schneide
- 121C: Rücken
- 121D: Werkzeugwelle
- 121E: Kopplungsabschnitt
- 121F: Kopfteil
- 121G: oberer Festlegungsabschnitt
- 121H: unterer Festlegungsabschnitt
- 122: Heizsystem
- A: Rotationsachse
- α: Winkel
- D1: erste Drehrichtung
- D2: zweite Drehrichtung
- M: Anlagenkennlinie
- Δp: Druckdifferenz
- Q: Volumenstrom
- S: Strömungspfad

## Patentansprüche

1. Elektromotor (1), insbesondere für eine Küchenmaschine (100), mit einem Rotor (20) und einem Stator (10),
wobei der Rotor (20) um eine Rotationsachse (A) relativ zum Stator (10) in einer ersten Drehrichtung (D1) und in einer zweiten, der ersten Drehrichtung (D1) entgegengesetzten, Drehrichtung (D2) drehbar ist,
wobei der Elektromotor (1), insbesondere der Rotor (20), ein Lüfterrad (30) zur Kühlung des Elektromotors (1) aufweist,
wobei das Lüfterrad (30) Schaufeln (32) und einen ringförmigen Tragkörper (31) für die Schaufeln (32) aufweist, wobei die Schaufeln (32) auf einer Axialseite (31B) des Tragkörpers (31) angeordnet sind, um Luft in radialer Richtung aus dem Elektromotor (1) zu leiten,
**dadurch gekennzeichnet,**
**dass** jede Schaufel (32) ein äußeres Ende (32A) und ein inneres Ende (32B) aufweist, wobei das äußere Ende (32A) zumindest im Wesentlichen in radialer Richtung verläuft und wobei das innere Ende (32B) in die erste Drehrichtung (D1) gebogen ist, und/oder
**dass** die Schaufeln (32) radial außen über den Tragkörper (31) hinausragen.

2. Elektromotor nach Anspruch 1, wobei die Schaufeln (32) an ihrem radial äußeren Ende (32A) eine Spitze (32C) aufweisen.

3. Elektromotor nach Anspruch 1 oder 2, wobei die inneren Enden (32B) der Schaufeln (32) von einem Innenrand (31D) des Tragkörpers (31) beabstandet sind.

4. Elektromotor nach einem der voranstehenden Ansprüche, wobei die Schaufeln (32) rippenförmig ausgebildet sind und/oder sich in axialer Richtung geradlinig erstrecken.

5. Elektromotor nach einem der voranstehenden Ansprüche, wobei das innere Ende (32B) einer Schaufel (32) mit der radialen Richtung einen Winkel (α) von mehr als 35° und/oder weniger als 55° einschließt.

6. Elektromotor nach einem der voranstehenden Ansprüche, wobei sich die Dicke des Tragkörpers (31) radial nach außen verjüngt.

7. Elektromotor nach einem der voranstehenden Ansprüche, wobei das Lüfterrad (30) sich in radialer Richtung erstreckende Speichen (35, 36) aufweist.

8. Elektromotor nach Anspruch 7, wobei die Speichen (35) T-trägerförmig ausgebildet sind, und/oder wobei sich die Höhe der Speichen (35) von innen nach außen zumindest abschnittsweise verringert.

9. Elektromotor nach Anspruch 7 oder 8, wobei das Lüfterrad (30) äußere Speichen (35) und innere Speichen (36) aufweist, wobei die inneren Speichen (36) zu den äußeren Speichen (35) versetzt angeordnet sind und/oder wobei die äußeren und inneren Speichen (35, 36) über einen Verbindungsring (37) miteinander verbunden sind.

10. Elektromotor nach einem der voranstehenden Ansprüche, wobei das Lüfterrad (30) seitliche Öffnungen (34B) aufweist, um Material beim Wuchten des Elektromotors (1) absaugen zu können, und/oder wobei das Lüfterrad (30) seitliche Einbuchtungen (34A) zum Einführen eines Wuchtbohrers aufweist.

11. Elektromotor nach einem der voranstehenden Ansprüche, wobei der Elektromotor (1) eine Lagerbrücke (50) mit seitlichen Lüftungsöffnungen (51) aufweist, wobei die Schaufeln (32) auf der Höhe der Lüftungsöffnungen (51) angeordnet sind und/oder wobei die äußeren Enden (32A) der Schaufeln (32) jeweils eine äußere Kante (32E) aufweisen, die zumindest im Wesentlichen parallel zur Wandung der Lagerbrücke (50), die die Lüftungsöffnungen (51) aufweist, verlaufen.

12. Küchenmaschine (100) mit einem Elektromotor (1) nach einem der voranstehenden Ansprüche, wobei die Küchenmaschine (100) ein Werkzeug (121) aufweist, das mittels des Elektromotors (1) antreibbar ist, wobei das Werkzeug (121) nur eine in die erste Drehrichtung (D1) orientierte Schneide (121A) oder nur in die erste Drehrichtung (D1) orientierte Schneiden (121A) aufweist, so dass Lebensmittel nur zerschnitten werden, wenn der Elektromotor (1) in die erste Drehrichtung (D1) betrieben wird.

13. Verfahren zum Betreiben einer Küchenmaschine (100) zur Zubereitung von Lebensmitteln mittels eines Rezepts, insbesondere einer Küchenmaschine (100) nach Anspruch 12,
wobei die Küchenmaschine (100) einen Elektromotor (1) mit einem Rotor (20) und einem Stator (10), insbesondere einen Elektromotor (1) nach einem der Ansprüche 1 bis 11, und ein von dem Elektromotor (1) angetriebenes Werkzeug (121) aufweist,
wobei der Elektromotor (1) einen Stator (10) und einen relativ zum Stator (10) um eine Rotationsachse (A) drehbaren Rotor (20) mit einem Lüfterrad (30) zur Kühlung des Elektromotors (1) aufweist,
wobei der Rotor (20) um eine Rotationsachse (A) relativ zum Stator (10) in einer ersten Drehrichtung (D1) und in einer zweiten, der ersten Drehrichtung (D1) entgegengesetzten, Drehrichtung (D2) drehbar ist,
wobei der Rotor (20) mit dem Lüfterrad (30) bei der Ausführung des Rezepts sowohl in die erste Drehrichtung (D1) als auch in die zweite Drehrichtung (D2) gedreht wird, und
wobei die Drehrichtung, die Drehdauer und/oder die Drehzahl des Rotors (20) in Abhängigkeit von dem Rezept variiert wird, wobei die Gesamt-Drehdauer und/oder die maximale und/oder durchschnittliche Drehzahl für die erste Drehrichtung (D1) größer ist als für die zweite Drehrichtung (D2),
**dadurch gekennzeichnet,**
**dass** der Rotor (20) ein Lüfterrad (30) mit in die erste Drehrichtung (D1) gebogenen Schaufeln (32) aufweist, so dass das Lüfterrad (30) bei gleicher Drehzahl in der ersten Drehrichtung (D1) einen größeren Luftvolumenstrom (Q) als in der zweiten Drehrichtung (D2) erzeugt.

14. Verfahren nach Anspruch 13, wobei sowohl beim Betrieb in die erste Drehrichtung (D1) als auch in die zweite Drehrichtung (D2) Luft zur Kühlung des Elektromotors (1) an einer axialen Seite des Elektromotors (1) in axialer Richtung einströmt und an der gegenüberliegenden Seite in radialer Richtung ausströmt.

15. Verfahren nach Anspruch 13 oder 14, wobei das Werkzeug (121) nur eine in die erste Drehrichtung (D1) orientierte Schneide (121A) oder nur in die erste Drehrichtung orientierte Schneiden (121A) zum Zerschneiden von Lebensmitteln aufweist, die nur wirkt oder wirken, wenn der Elektromotor (1) in die erste Drehrichtung (D1) betrieben wird.
